# EUROPEAN PATENT APPLICATION

(11) **EP 4 791 016 A1**
(43) Date of publication of application: **12.08.2026**
(21) Application number: 24886432.4
(22) Date of filing: 31.10.2024
(51) Int. Cl.: H04N 23/55, H04N 23/54, H04N 23/67, H04N 23/68, G03B 17/17, G03B 3/10, G03B 13/34, G03B 5/06, G02B 17/08, G02B 1/10

(54) **CAMERA MODULE AND ELECTRONIC DEVICE COMPRISING SAME**

(30) Priority: 31.10.2023 KR 20230147735; 25.01.2024 KR 20240011860
(71) Applicant: Samsung Electronics Co., Ltd., Suwon-si, Gyeonggi-do 16677 (KR)
(72) Inventor: LEE, Yongjae, Suwon-si Gyeonggi-do 16677 (KR)
(74) Representative: Appleyard Lees IP LLP
(86) International application number: PCT/KR2024/096453
(87) International publication number: WO 2025/095763

(57) **Abstract**

According to an embodiment of the present disclosure, a camera module may be provided. The camera module may comprise: a lens; at least one reflection and refraction member through which light is reflected at least twice; and an image sensor. The reflection and refraction member may totally reflect at least a part of light incident to the reflection and refraction member. Various other embodiments are also possible.

## Description

### [Technical Field]

An embodiment of the disclosure relates to, for example, a camera module and an electronic device including the same.

### [Background Art]

Optical devices, such as cameras capable of capturing still images or videos, have been widely used. While film-type cameras were predominant in the past, digital cameras or video cameras equipped with solid-state image sensors, such as charge-coupled devices (CCDs) or complementary metal-oxide semiconductors (CMOSs), have become widespread in recent years. Cameras employing solid-state image sensors (CCDs or CMOSs) are gradually replacing film-type cameras because they allow for easy storage, reproduction, and transfer of images, compared to the film-type cameras.

As the primary consumer model for cameras has shifted from conventional compact cameras to camera modules embedded in smartphones, the biggest issue in camera-related industries has been focused on miniaturization while maintaining image quality. High image quality may be realized by a camera having a large optical system and a large imaging plane (image sensor). Therefore, there is a trade-off relationship between high image quality and miniaturization, and to overcome this, an embodiment employing multiple single-focus lens-type camera modules in a single electronic device has been applied.

When multiple single-focus lens-type camera modules are employed in one electronic device, a zoom effect may generally be created by having each of the single-focus lens-type camera module possess a different focal length and appropriately operating them with digital zoom. For example, in an optical system corresponding to a 35mm film camera, the most commonly applied forms of a camera module are one (e.g., an ultra-wide camera) with a short focal length and one (e.g., a telephoto camera) with a long focal length, relative to a wide camera having a focal length of 24 to 35mm. Among them, a telephoto camera with a relatively long focal length (generally 3x) requires a longer longitudinal deployment space than other cameras. Consequently, an optical system including a lens with a smaller diameter than that of a wide-angle camera may generally be employed. However, as the market increasingly demands higher zoom performance, the difficulty of arranging cameras within a limited space is growing. To address this, electronic devices are under development, which include camera modules to which refractive-type (or folded-type) optical systems easy to arrange inside the electronic devices, while having high optical performance, are applied. A camera module to which a folded-type optical system is applied may be manufactured by refracting light two or more times and shortening the incident path of the light, while maintaining the effective focal length of the light.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment of the disclosure, a camera module may be provided. The camera module may include a lens, at least one reflective and refractive member in which light is reflected at least twice, and an image sensor IS. The reflective and refractive member may totally reflect at least a portion of light incident on the reflective and refractive member by satisfying the following Formula 1, Formula 2, Formula 3, Formula 4, and Formula 5 regarding a refractive index for total reflection inside the reflective and refractive member.${n}_{i} \geq \frac{C 1 + b}{2 a - C 2}$
(where nᵢ is a refractive index of the reflective and refractive member, a is an angle between an incident surface of the reflective and refractive member and a first reflective surface adjacent to the incident surface, b is an incident angle of light incident on the reflective and refractive member, and C1 and C2 are a coefficient of a linear equeation and a constant respectively, when an inverse sine function for a reciprocal of the refractive index of the reflective and refractive member is expressed as a linear equation for a reciprocal of the reflective and refractive member),

$10 < a < 50$

$b < 45$

$1.1 < C 1 < 1.4$

$- 0.3 < C 2 < + 0.3$

According to an embodiment of the disclosure, an electronic device may be provided. The electronic device may include a reflective and refractive member configured to reflect and/or refract at least a portion of light, and an image sensor configured to detect at least a portion of light passing through the reflective and refractive member. The reflective and refractive member may include a first surface on which light is incident and a second surface inclined with respect to the first surface. The reflective and refractive member may be configured to totally reflect at least a portion of light incident on the reflective and refractive member by satisfying the following Formula 9, Formula 10, Formula 11, Formula 12, and Formula 13 regarding a total reflection function inside the reflective and refractive member.$TRF = \frac{C 1 + b}{2 a - C 2}$
(where a is an angle between the first surface and the second surface adjacent to the first surface, b is an incident angle of light incident on the reflective and refractive member, and C1 and C2 are a coefficient of a linear equation and a constant, respectively, when an inverse sine function for a reciprocal of a refractive index of the reflective and refractive member is expressed as a linear equation for a reciprocal of the reflective and refractive member).

$10 < a < 50$

$b < 45$

$1.1 < C 1 < 1.4$

$- 0.3 < C 2 < + 0.3$

### [Brief Description of Drawings]

The above or other aspects, configurations, and/or advantages of an embodiment of the disclosure may become more apparent from the following detailed description with reference to the accompanying drawings.
FIG. 1 is a diagram illustrating a camera module including a reflective and refractive member.
FIG. 2 is a diagram illustrating a camera module including a reflective and refractive member.
FIG. 3 is a diagram illustrating a camera module including a reflective and refractive member.
FIG. 4 is an enlarged view illustrating a portion of a reflective and refractive member.
FIG. 5 is a diagram illustrating Snell's Law of refraction of light.
FIG. 6A is a diagram illustrating a state in which light is refracted without being totally reflected according to Snell's Law.
FIG. 6B is a diagram illustrating a critical state in which total reflection occurs according to Snell's Law.
FIG. 6C is a diagram illustrating a state in which light is totally reflected according to Snell's Law.
FIG. 7 is a graph illustrating a correlation between 1/n and an inverse sine function.
FIG. 8 is a schematic diagram illustrating a relationship between an F-number and a numerical aperture (N.A).
FIG. 9A is a schematic diagram illustrating a path of light that is incident on and then emitted from a reflective and refractive member.
FIG. 9B is an enlarged view illustrating a portion of a reflective and refractive member.
FIG. 10 is a diagram illustrating a state in which light incident on a reflective and refractive member is emitted back through a first surface.
FIG. 11 is a diagram illustrating a state in which light incident on a reflective and refractive member is totally reflected from a first surface.
FIG. 12 is a diagram illustrating a state in which light incident on a reflective and refractive member having a first included angle and a first refractive index is totally reflected and then emitted.
FIG. 13 is a diagram illustrating a state in which light incident on a reflective and refractive member having a first included angle and a second refractive index is emitted back through a first surface.
FIG. 14A is a diagram illustrating a state in which light incident at a first angle on a reflective and refractive member having a second included angle and a third refractive index is totally reflected and then emitted.
FIG. 14B is a diagram illustrating a state in which light incident at a second angle on a reflective and refractive member having a second included angle and a third refractive index is totally reflected and then emitted.
FIG. 14C is a diagram illustrating a state in which light incident at a second angle on a reflective and refractive member having a second included angle and a fourth refractive index is emitted back through a first surface.
FIG. 15 is a perspective view illustrating a reflective and refractive member including an effective incident area.
FIG. 16A is a diagram illustrating movement paths of light passing through an ineffective incident area and light passing through an effective incident area.
FIG. 16B is a diagram illustrating a movement path of light passing through an effective incident area.
FIG. 16C is a diagram illustrating a reflective and refractive member including a cut surface.
FIG. 17 is a block diagram illustrating an electronic device (e.g., an optical device) in a network environment according to various embodiments.
FIG. 18 is a block diagram illustrating a camera module according to various embodiments.

Throughout the accompanying drawings, similar reference numerals may be assigned to similar parts, components, and/or structures.

### [Mode for Carrying out the Invention]

A camera module including a reflective and refractive member such as a prism or a mirror may change the traveling direction of light inside the reflective and refractive member. The overall length of an optical system may be reduced and the height of the module may be lowered by reflecting and/or refracting light more times using the reflective and refractive member.

The disclosure may disclose a camera module including a reflective and refractive member that satisfies a total reflection condition in order to reflect and/or refract the traveling direction of light more times inside the reflective and refractive member.

The technical objects to be achieved by the disclosure are not limited to the technical objects mentioned above, and other technical objects not mentioned will be clearly understood by those skilled in the art from the following description.

The following description of the accompanying drawings may provide an understanding of various exemplary implementations of the disclosure, including the claims and equivalents thereof. Although an exemplary embodiment disclosed in the following description includes various specific details to aid understanding, these are considered to be merely one of various exemplary embodiments. Accordingly, those skilled in the art will understand that various changes and modifications may be made to various implementations described herein without departing from the scope and spirit of the disclosure. Additionally, a description of well-known functions and configurations will be avoided for clarity and conciseness.

The terms and words used in the following description and claims are not limited to their bibliographical meanings but may be used to clearly and consistently describe an embodiment of the disclosure. Therefore, it will be apparent to those skilled in the art that the following description of various implementations of the disclosure is provided for illustration purposes only and not for the purpose of limiting the disclosure as defined by the scope of the claims and their equivalents.

It should be understood that the singular forms "a," "an," and "the" include plural referents unless the context clearly dictates otherwise. Thus, for example, a reference to "a component surface" may be understood as including one or more surfaces of the component.

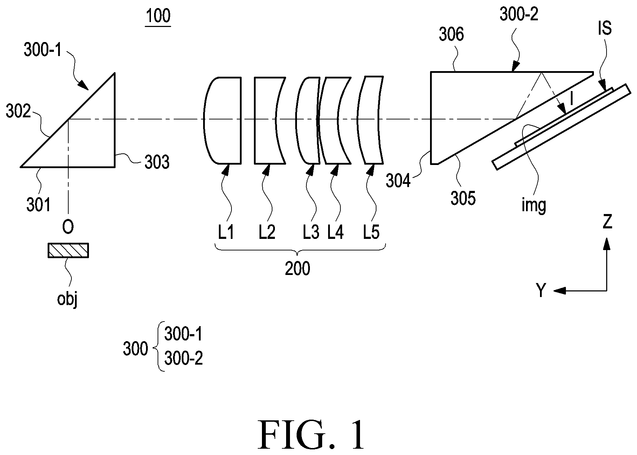

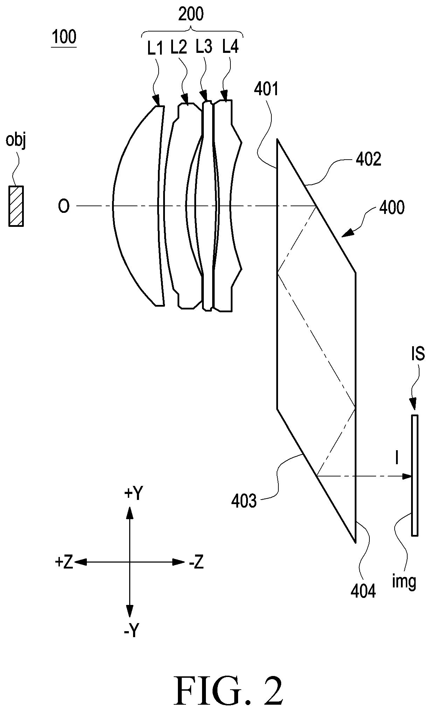

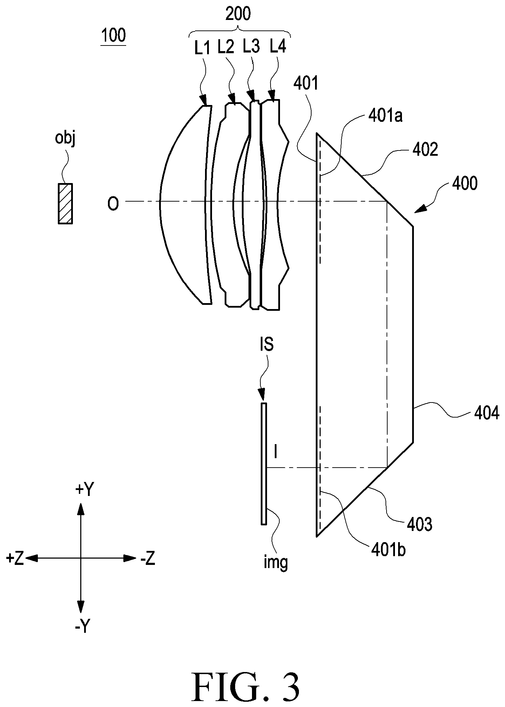

FIG. 1 is a diagram illustrating a camera module including a reflective and refractive member. FIG. 2 is a diagram illustrating a camera module including a reflective and refractive member. FIG. 3 is a diagram illustrating a camera module including a reflective and refractive member.

In the following detailed description, the longitudinal direction, width direction, and/or thickness direction of a camera module 100 and/or the components included in the camera module 100 may be mentioned. The longitudinal direction may be defined as a 'Y-axis direction,' the width direction as an 'X-axis direction,' and the height direction (thickness direction) as a 'direction perpendicular to the X-axis and Y-axis directions.' The 'direction perpendicular to the X-axis and Y-axis directions' may refer to a "Z-axis direction" in a Cartesian coordinate system. In an embodiment, a direction that a surface of a component faces may refer to a direction in which a normal line drawn from the surface of the component is directed. In an embodiment, for a direction that a component faces, 'negative/positive (-/+)' may be mentioned along with the Cartesian coordinate system illustrated in the drawings. For example, a surface facing an object side O of a lens (e.g., a first lens L1 in FIG. 2) closest to the object side O in the camera module 100 and/or an incident surface (e.g., a first incident surface 301 in FIG. 1 and an incident surface 401 in FIG. 2) of the reflective and refractive member may be defined as a 'surface facing a +Z-axis direction,' while a surface facing an image side I of a lens (e.g., a fourth lens L4 in FIG. 2) closest to the side of an image sensor IS in the camera module 100 and/or an exit surface (e.g., an exit surface 404 in FIG. 2) of the reflective and refractive member may be defined as a 'surface facing a -Z-axis direction.' However, the description of these directions is not limited thereto. Although not separately shown in the drawings, when an electronic device in which the camera module 100 is mounted is a portable terminal such as a smartphone, the front surface of the electronic device may be understood as a 'surface facing the -Z-axis direction' and the rear surface of the electronic device as a 'surface facing the +Z-axis direction' unless otherwise specified. When the camera module 100 is a front camera mounted on the electronic device, the surface facing the object side O of the lens (e.g., the first lens L1 in FIG. 2) closest to the object side may face the same direction as the front surface of the electronic device, and when the camera module 100 is a rear camera mounted on the electronic device, the surface facing the object side of the lens (e.g., the first lens L1 in FIG. 2) closest to the object side may face the same direction as the rear surface of the electronic device. As such, the directions are distinguished merely for convenience, not limiting the arrangement directions of the camera module 100 and its component(s), and may be set in various ways according to embodiments. In an embodiment, the 'X-axis direction' may be meant to include both a '-X-axis direction' and a '+X-axis direction.' The 'Y-axis direction' may also be meant to include both a '+Y-axis direction' and a '-Y-axis direction.' For example, the thickness of the electronic device may be defined as the distance between the front surface (e.g., the surface facing the -Z-axis direction) and the rear surface (e.g., the surface facing the +Z-axis direction) of the electronic device, and the thickness direction of the electronic device may be defined as the 'Z-axis direction.' It is to be noted that the above description is based on the Cartesian coordinate system shown in the drawings, for brevity, and the descriptions of these directions or components do not limit the embodiment(s) of the disclosure.

According to an embodiment, the camera module 100 and an electronic device including the same may include a lens assembly 200. The electronic device may include the lens assembly 200 having an optical axis O-I (a dash-dotted line) from the object (or external object) side O toward the image side I. The object side may represent a direction in which an object obj is located, and the image side may represent a direction in which an imaging plane img on which an image is formed is located. Further, a "surface facing the object side O" of a lens may refer to, for example, a surface of the lens toward the object obj with respect to the optical axis O-I, meaning a left surface (or front surface) of the lens in the drawings according to an embodiment of the disclosure, and a "surface facing the image side I" may refer to a surface of the lens toward the imaging plane img with respect to the optical axis O-I, meaning a right surface (or rear surface) of the lens in the drawings. The imaging plane img may be, for example, a part where an imaging device or the image sensor IS is disposed and an image is formed. The optical axis O-I may also be defined as a light path passing through the center of at least one lens and the center of the image sensor IS, when the lens assembly 200 including the at least one lens and the image sensor IS are aligned.

The lens assembly 200 may include a plurality of lenses (e.g., a plurality of lenses L1, L2, L3, L4, and L5 in FIG. 1 or a plurality of lenses L1, L2, L3, and L4 in FIGS. 2 and 3). In each lens, a portion closer to the optical axis O-I may be referred to as a 'chief portion,' and a portion farther from the optical axis O-I (or near an edge of the lens) may be referred to as a 'marginal portion.' The chief portion may be, for example, a portion of the first lens L1, which intersects the optical axis O-I. The marginal portion may be, for example, a portion of the first lens L1, which is spaced apart from the optical axis by a predetermined distance. The marginal portion may include, for example, an end portion of the lens, which is farthest from the optical axis O-I of the lens. In the disclosure, in describing a direction that a certain lens included in the camera module 100 faces, the direction may mean a direction that the chief portion or marginal portion of a corresponding lens surface faces.

In the following detailed description of the camera module 100, the concept of the 'optical axis O-I' may be mentioned. The optical axis may be illustrated as a line (imaginary line) connecting the center of a lens (when there are plurality of lenses, the centers of the plurality of lenses) in a drawing of an optical system including the camera module 100. For example, the optical axis O-I may be illustrated as a line passing through the center of curvature of a surface facing the object side of the first lens (e.g., the first lens L1) from the object (or external object) side O and the center of curvature of a surface facing the image side I of the last lens (e.g., an n^{th} lens) from the object side. According to another example, the optical axis O-I may be illustrated as a line passing through the center of the image sensor IS as well as those of the plurality of lenses. According to an embodiment, the optical axis O-I may also be understood as a 'rotational center axis' where there is no change in optical performance upon rotation around the axis.

The camera module 100 and the electronic device including the same may include at least one of a wide-angle camera, an ultra-wide-angle camera, a macro camera, a telephoto camera, or an infrared photodiode, as a light-receiving element, and may include a flash or an infrared laser diode as a light source or a light-emitting element. In an embodiment, the electronic device may detect the distance or depth to an object by emitting an infrared laser toward the object and receiving the infrared laser reflected by the object using the infrared laser diode and the infrared photodiode. In an embodiment, the electronic device may capture an object using the camera module 100 having any one or a combination of two or more of the afore-mentioned cameras, and provide illumination toward the object using the flash as needed.

Among the cameras that may be included in the camera module 100, the wide-angle camera, the ultra-wide-angle camera, or the macro camera may have a smaller total lens length along an optical axis direction of the lens(es), compared to a telephoto camera. For example, the total lens length of telephoto camera(s) having a relatively long focal length may be larger than that of other cameras. The 'total lens length' may be, for example, referring to FIG. 1, substantially the distance from an object-side surface of a reflective and refractive member 300-1 close to the object side O to the imaging plane img of the image sensor IS. Alternatively, the 'total lens length' may be, for example, referring to FIG. 2, substantially the distance from an object-side surface of the first lens L1 on the object side O to the imaging plane img of the image sensor IS. In defining the 'total lens length,' a reference for measuring a distance may be based on a distance on the travel path of light passing through the center of the lenses and moving along the optical axis O-I. In an embodiment, even if the lenses of the wide-angle camera, the ultra-wide-angle camera, or the macro camera are arranged along the thickness direction (e.g., +Z-axis and/or -Z-axis direction) of the electronic device, the effect on the thickness of the electronic device may be substantially small compared to the telephoto camera. Therefore, in this case, the wide-angle camera, the ultra-wide-angle camera, or the macro camera may be disposed in the electronic device in a state where a direction in which light is incident from the outside into the electronic device and the optical axis direction of the lenses are substantially the same. The wide-angle camera, the ultra-wide-angle camera, or the macro camera may be referred to as a direct-type optical system. In an embodiment, compared to the wide-angle camera, the ultra-wide-angle camera, or the macro camera, the telephoto camera has a small field of view but may be useful for capturing an object at a greater distance. The telephoto camera may include more lenses than the wide-angle camera, the ultra-wide-angle camera, or the macro camera. For example, when the lens assembly 200 including at least one lens is arranged in the thickness direction (e.g., +Z-axis and/or -Z-axis direction) of the electronic device, the thickness of the electronic device may increase, or a significant portion of the lens assembly 200 may protrude to the outside of the electronic device. Accordingly, as a means for securing a long focal length within a limited space in order to reduce the thickness of the electronic device including the lens assembly 200 by reflecting or refracting the path of light incident on the lens assembly 200, the telephoto camera may include at least one reflective and refractive member (e.g., a reflective and refractive member 300 in FIG. 1 or a reflective and refractive member 400 in FIGS. 2 and 3).

The disclosure may provide the camera module 100 including a telephoto camera having a field of view (FOV) between approximately 5 degrees and approximately 35 degrees. When the FOV of the camera module 100 is greater than or equal to 35 degrees, the focal length may be shorter and the gap between a sensor and a lens is short, thereby making the arrangement of the reflective and refractive member difficult. When the FOV of the camera module 100 is less than or equal to 5 degrees, the focal length may be longer and the thickness of the camera module 100 may increase, which may be disadvantageous for the miniaturization of the electronic device.

The camera module 100 may reflect and refract the path of light at least twice by including the reflective and refractive member (e.g., the reflective and refractive member 300 in FIG. 1 or the reflective and refractive member 400 in FIGS. 2 and 3), so that at least one lens included in the lens assembly 200 may be disposed to be movable forward and backward in the direction of the optical axis O-I, thereby preventing or reducing an increase in the thickness of the electronic device. This optical system may be referred to as a folded-type camera. In the camera module 100 of the disclosure, a folded-type camera may be applied as a telephoto camera.

In a camera module including a lens assembly forming a direct-type optical system, the optical axis O-I may be formed substantially parallel to any one direction (e.g., Z-axis direction) in the Cartesian coordinate system. In contrast, in the camera module 100 including a lens assembly forming a folded-type optical system, the optical axis O-I may include a light path substantially parallel to any one direction (e.g., Z-axis direction) in the Cartesian coordinate system, but may also include a light path which is bent to face another direction (e.g., Y-axis direction). Unlike the direct-type camera module where the path of light incident on the lens assembly and reaching the image sensor is formed in a straight line without being bent, the folded-type camera module may be a camera module in which a path is bent at least twice for light incident on the lens assembly to reach the image sensor. The folded-type camera module may typically include a reflective and refractive member (e.g., the reflective and refractive member 300 in FIG. 1 or the reflective and refractive member 400 in FIGS. 2 and 3) that reflects and refracts light at least once. The reflective and refractive member (e.g., the reflective and refractive member 300 in FIG. 1 or the reflective and refractive member 400 in FIGS. 2 and 3) may include, for example, a prism or a mirror. As a criterion for distinguishing between the direct-type camera and the folded-type camera, whether the path of light reaching the image sensor is bent may be based on bending by the reflective and refractive member, rather than bending of light by each of the lenses included in the lens assembly.

In the disclosure, the expression 'reflective and refractive' may be interpreted as having substantially the same meaning as the expression 'reflective and/or refractive.' Light passing through the 'reflective and refractive member' of the disclosure may only be reflected, only be refracted, or both reflected and refracted in its travel path. Accordingly, the 'reflective and refractive member' of the disclosure may also be referred to as a 'reflective member' or a 'refractive member.' Alternatively, in an embodiment, the 'reflective and refractive member' of the disclosure may be simply referred to as a 'member.' Alternatively, the 'reflective and refractive member' of the disclosure may be simply referred to as a 'mirror,' a 'prism,' or a 'mirror and prism.' In 'reflective and refractive,' reflection of light and refraction of light may not necessarily occur exactly once each. When light is reflected by the reflective and refractive member (e.g., a mirror), it may be interpreted that the light is refracted from the perspective of the whole traveling path of the light. Conversely, when the travel path of light is refracted by a refractive member (e.g., a prism), it may be interpreted that the light is reflected from a surface of the refractive member.

According to an embodiment, the lens assembly 200 may include a single lens or a combination of a plurality of lenses. The combination of the plurality of lenses (e.g., the lenses L1, L2, L3, L4, and L5 in FIG. 1 or the lenses L1, L2, L3, and L4 in FIGS. 2 and 3) is not limited to those shown in the drawings. Although five lenses L1, L2, L3, L4, and L5 are shown in FIG. 1 and four lenses L1, L2, L3, and L4 are shown in FIGS. 2 and 3, these are merely exemplary, and the camera module 100 may include a smaller number of (3 or fewer) lenses or a larger number of (6 or more) lenses.

The image sensor IS may be configured to detect light that is reflected or refracted by the reflective and refractive member (e.g., the reflective and refractive member 300 in FIG. 1 or the reflective and refractive member 400 in FIGS. 2 and 3) and is incident on the imaging plane img. For example, light incident from the outside of the camera module 100 may be detected at the image sensor IS through the lens assembly 200 and the reflective and refractive member (e.g., the reflective and refractive member 300 in FIG. 1 or the reflective and refractive member 400 in FIGS. 2 and 3), and the electronic device may obtain an object image based on a signal or information detected through the image sensor IS. According to an embodiment, in performing an anti-shake operation, the image sensor IS may be shifted in the longitudinal direction (e.g., +Y-axis and -Y-axis directions) or the width direction (e.g., a direction perpendicular to the +Y and -Y axes and the +Z and -Z axes) of the camera module 100. In an embodiment, when the lens assembly is used as a telephoto camera, the quality of a captured image may be further enhanced by incorporating the anti-shake function. In an embodiment, when the image sensor IS is made large, the optical performance of the camera module 100 may be further increased.

According to the embodiment of FIG. 1, the reflective and refractive member 300 may include a plurality of reflective and refractive members 300-1 and 300-2. For example, the reflective and refractive member 300 may include a first reflective and refractive member 300-1 and a second reflective and refractive member 300-2. The first reflective and refractive member 300-1 may be disposed close to the object side O, and the second reflective and refractive member 300-2 may be disposed close to the side of the image sensor IS. The lens assembly 200 may be disposed between the first reflective and refractive member 300-1 and the second reflective and refractive member 300-2. Referring to FIG. 1, the first reflective and refractive member 300-1 may include a first incident surface 301 on which light is initially incident, a first reflective surface 302 inclined with respect to the first incident surface 301, and a first exit surface 303 inclined approximately perpendicularly to the first incident surface 301 and inclined with respect to the first reflective surface 302. The second reflective and refractive member 300-2 may include a second incident surface 304 on which light passing through the lens assembly 200 is incident, a second reflective surface 305 inclined with respect to the second incident surface 304, and a third reflective surface 306 inclined approximately perpendicularly to the second incident surface 304 and inclined with respect to the second reflective surface 305. Referring to FIG. 1, while light reflected by the second reflective surface 305 is shown as being reflected by the third reflective surface 306 and traveling back to the second reflective surface 305 to be emitted in the second reflective and refractive member 300-2, the disclosure is not necessarily limited thereto. For example, unlike FIG. 1, an embodiment in which the position of the image sensor IS is changed to face the third reflective surface 306 is also applicable, and in this case, light reflected by the second reflective surface 305 may be emitted through the third reflective surface 306 in the second reflective and refractive member 300-2.

According to the embodiments of FIGS. 2 and 3, the reflective and refractive member 400 may be disposed between the lens assembly 200 and the image sensor IS. The arrangement of the reflective and refractive member 400 between the lens assembly 200 and the image sensor IS may include the arrangement of the reflective and refractive member 400 between light paths on the optical axis O-I, which are formed when the lens assembly 200 and the image sensor IS are aligned. Light incident on the lens assembly 200 from the outside may be reflected and refracted at least twice while passing through the reflective and refractive member 400, and focused on or aligned with the image sensor IS. A camera with such a structure may be referred to as a 'lens lead-type camera.'

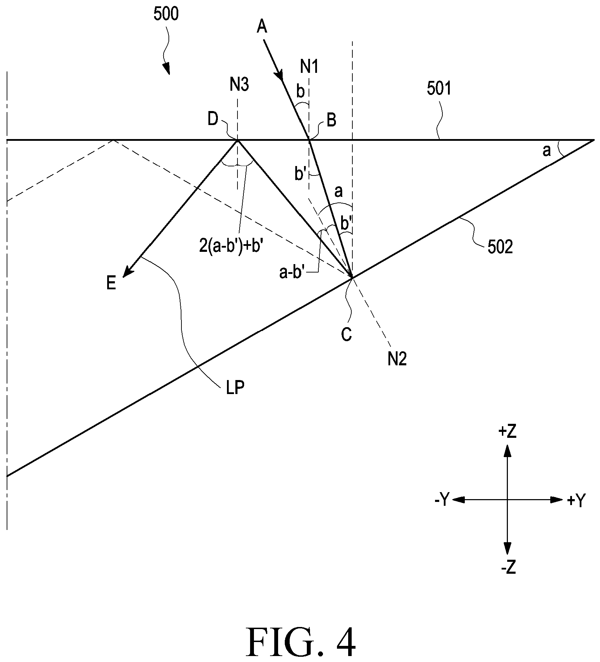

Referring to FIGS. 2 and 3, the reflective and refractive member 400 may include an incident surface 401 on which light passing through the lens assembly 200 is incident, a first reflective surface 402 inclined with respect to the incident surface 401, and a second reflective surface 403 formed to be inclined with respect to the incident surface 401 and spaced apart from the first reflective surface 402. The incident surface 401 may be a surface through which light passing through the lens assembly 200 initially enters the reflective and refractive member 400. According to an embodiment, the incident surface 401 may be formed to be spaced apart from the lens (e.g., the fourth lens L4) closest to the image side I in the lens assembly 200 by a predetermined distance in a direction of the image side I. According to an embodiment, the incident surface 401 may be parallel to the front surface (e.g., a surface parallel to the -Z-axis direction) and the rear surface (e.g., a surface parallel to the +Z-axis direction) of the electronic device, respectively, and the optical axis O-I may be perpendicular to the incident surface 401. According to an embodiment, an opening or a prism or mirror capable of transmitting light may be formed in at least a portion of the incident surface 401, so that light may be transmitted. The first reflective surface 402 may be a surface from which light incident on the incident surface 401 is initially reflected or refracted. The first reflective surface 402 may be formed inclined with respect to the incident surface 401. An angle (e.g., an included angle a in FIG. 4) between the first reflective surface 402 and the incident surface 401 may be set in various ways according to embodiments. For example, FIG. 2 illustrates an embodiment in which the angle (e.g., the included angle a in FIG. 4) between the first reflective surface 402 and the incident surface 401 is approximately 30 degrees, and FIG. 3 illustrates an embodiment in which the angle (e.g., the included angle a in FIG. 4) between the first reflective surface 402 and the incident surface 401 is approximately 45 degrees. However, it is to be noted that the angle between the first reflective surface 402 and the incident surface 401 in FIGS. 2 and 3 may be set in various ways according to embodiments.

The reflective and refractive member 400 may include the exit surface 404 through which light passing through the reflective and refractive member 400 is emitted. According to another embodiment, the reflective and refractive member 400 may include the second reflective surface 403 formed to be inclined with respect to the incident surface 401 (or the exit surface 404) and spaced apart from the first reflective surface 402. According to an embodiment, the angle between the second reflective surface 403 and the exit surface 404 may be the same as the angle a between the first reflective surface 402 and the incident surface 401. Light incident perpendicularly to the incident surface 401 of the reflective and refractive member 400 may pass through an internal space (e.g., an optical waveguide) surrounded by the incident surface 401, the first reflective surface 402, the second reflective surface 403, and the exit surface 404 of the reflective and refractive member 400, and be emitted perpendicularly to the exit surface 404. Referring to FIG. 2, the exit surface 404, which is a different surface from the incident surface 401 on which light is incident, may be formed to be spaced apart from the incident surface 401. According to an embodiment, the exit surface 404 may face the incident surface 401 substantially parallel to it, while being formed spaced apart from the incident surface 401 by a predetermined distance. According to an embodiment, the incident surface 401 and the exit surface 404 may face in opposite directions, and the first reflective surface 402 and the second reflective surface 403 may face in opposite directions. The reflective and refractive member 400 may have a parallelogram cross-sectional shape in which the incident surface 401 and the exit surface 404 are substantially parallel, and the first reflective surface 402 and the second reflective surface 403 are substantially parallel. It may be expressed that the incident surface 401 is tilted in the same direction as the exit surface 404, and the first reflective surface 402 is tilted in the same direction as the second reflective surface 403. In the embodiment of FIG. 2, light passing through the reflective and refractive member 400 may have the same direction for light incidence and light emission, based on light traveling along the optical axis O-I.

According to an embodiment, while the incident surface 401 and the exit surface 404 may refer to a surface through which light is incident and a surface through which light is emitted, respectively, a partial area of the incident surface 401 and a partial area of the exit surface 404 may also serve as reflective surfaces. For example, the partial area of the incident surface 401 may correspond to an incident area (e.g., an incident portion 401a in FIG. 3) through which light is incident, and the remaining area excluding the partial area may correspond to a reflective area so that the incident light may be reflected inside the reflective and refractive member 400. According to an embodiment, the reflective area may be formed to surround the incident area.

In another example, the partial area of the exit surface 404 may correspond to an exit area (e.g., an exit portion 401b in FIG. 3) through which light is emitted, and the remaining area excluding the partial area may correspond to a reflective area so that light may be reflected inside the reflective and refractive member 400. According to an embodiment, the reflective area may be formed to surround the exit area.

According to an embodiment, light reflection may occur even in the incident area of the incident surface 401. For example, when light that has entered the lens and refractive member 400 through a portion of the incident area of the incident surface 401 passes through a reflective surface (e.g., the first reflective surface 402) and reaches another portion of the incident area again, the light at the other portion of the incident area may be reflected and continue to travel inside the lens and refractive member 400 rather than exiting to the outside through the incident area.

According to an embodiment, a portion or the entirety of the inner surface of the incident area may be treated with a coating so that light that has passed through the incident area may be reflected when it reaches the incident area again. According to an embodiment, the outer surface of the incident surface and/or the exit surface of the reflective and refractive member may be coated with a material that reduces reflectivity, and the inner surface of the incident surface and/or the exit surface may be coated with a material having higher reflectivity (e.g., a mirror coating) than the outer surface.

According to an embodiment, the incident surface 401 of the reflective and refractive member 400 may be referred to as a 'first surface,' the first reflective surface 402 as a 'second surface,' the second reflective surface 403 as a 'third surface,' and the exit surface 404 as a 'fourth surface.'

Referring to FIG. 3, the reflective and refractive member 400 may include the first surface 401, the fourth surface 404 substantially parallel to the first surface 401, the first reflective surface 402 connected to one edge of the first surface 401 and inclined with respect to the first surface 401 and the fourth surface 404, and the second reflective surface 403 connected to the other edge of the first surface 401 and inclined with respect to the first surface 401 and the fourth surface 404. The first surface 401 may also be referred to as an 'incident surface (e.g., the incident surface 401 of FIG. 2)' on which light is incident. However, unlike the embodiment of FIG. 2, in the embodiment of FIG. 3, light is not emitted through the fourth surface 404 facing the first surface 401, but instead, light may be emitted through the first surface 401 where the light was incident.

Referring to FIG. 3, light passing through the lens assembly 200 is incident through one portion 401a (or the incident portion 401a) of the first surface 401, and light reflected from the second reflective surface 403 may be emitted through another portion 401b (or the exit portion 401b) of the first surface 401. According to an embodiment, the reflective and refractive member 400 may have a form in which the first surface 401 and the fourth surface 404 are substantially parallel, while the first reflective surface 402 and the second reflective surface 403 are not parallel. According to an embodiment, the reflective and refractive member 400 may have a trapezoidal cross-sectional shape. According to an embodiment, the first surface 401 and the fourth surface 404 may face in opposite directions, and the first reflective surface 402 and the second reflective surface 403 may face in different directions. In this case, it may be expressed that the first surface 401 is tilted in the same direction as the fourth surface 404, and the first reflective surface 402 is tilted in a different direction from the second reflective surface 403. In the embodiment of FIG. 3, light passing through the reflective and refractive member 400 may have an incident direction and an exit direction which are opposite directions, based on light traveling along the optical axis O-I.

FIG. 3 illustrates the reflective and refractive member 400 in a different shape from that in FIG. 2. Hereinafter, in describing various embodiments, for convenience, the description will focus on the reflective and refractive member 400 in the form (e.g., a parallelogram shape) corresponding to FIG. 2. However, this description may also be applied adaptively to the reflective and refractive member 400 in the form (e.g., a trapezoidal shape) corresponding to FIG. 3.

According to the embodiments illustrated in FIGS. 2 and 3, although the reflective and refractive member 400 is shown as a single-piece component, it should be noted that the reflective and refractive member 400 may be formed by a combination of a plurality of reflective and refractive element pieces.

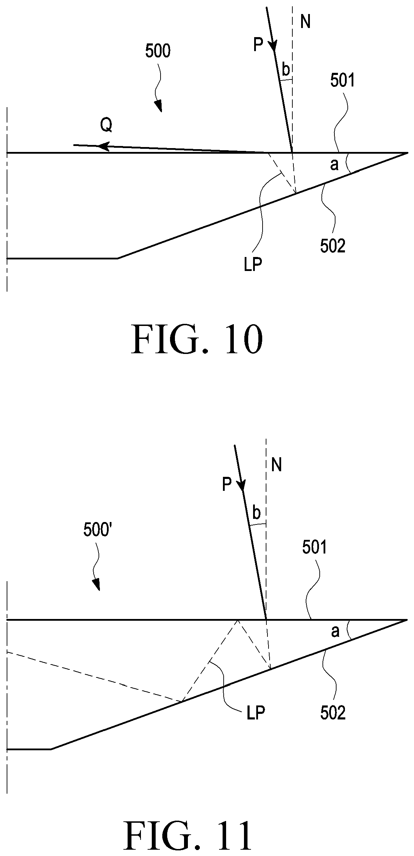

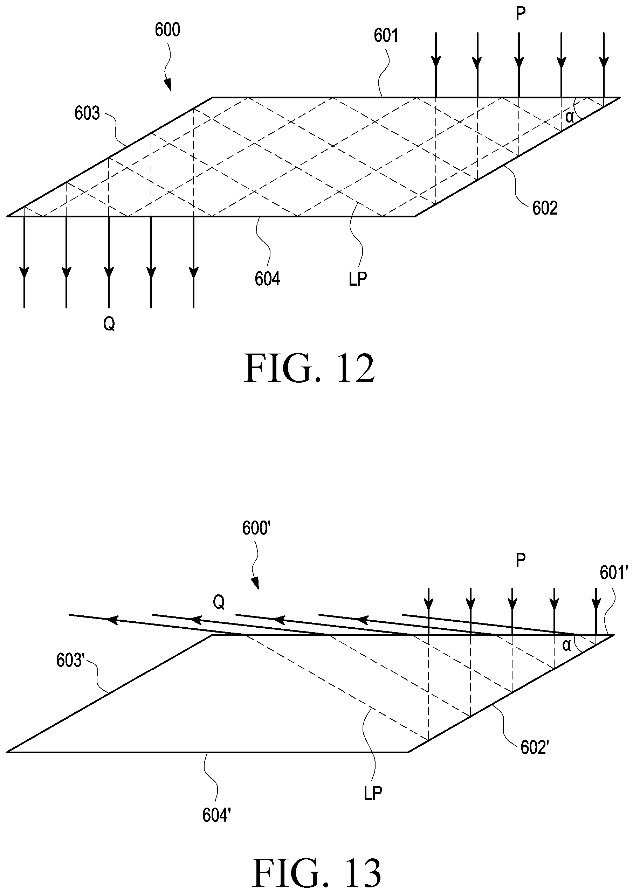

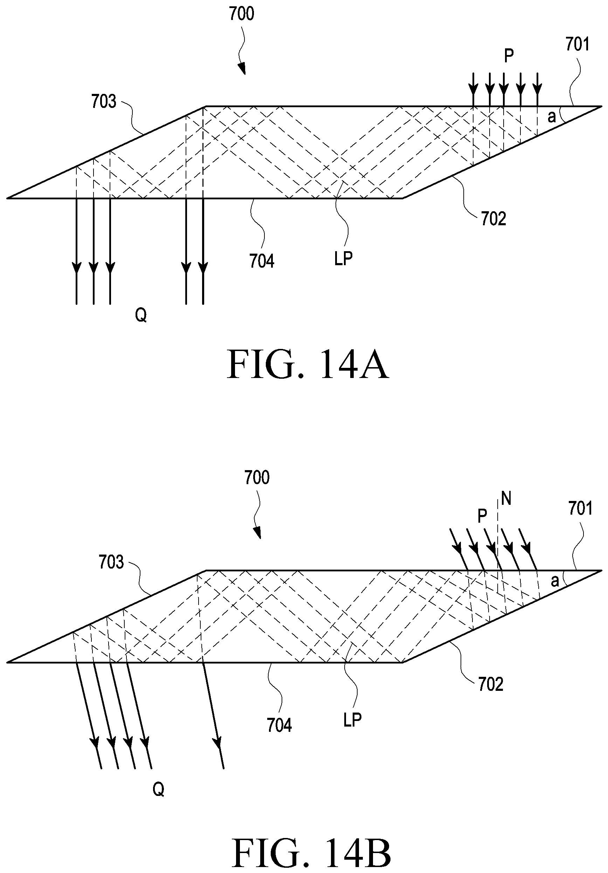

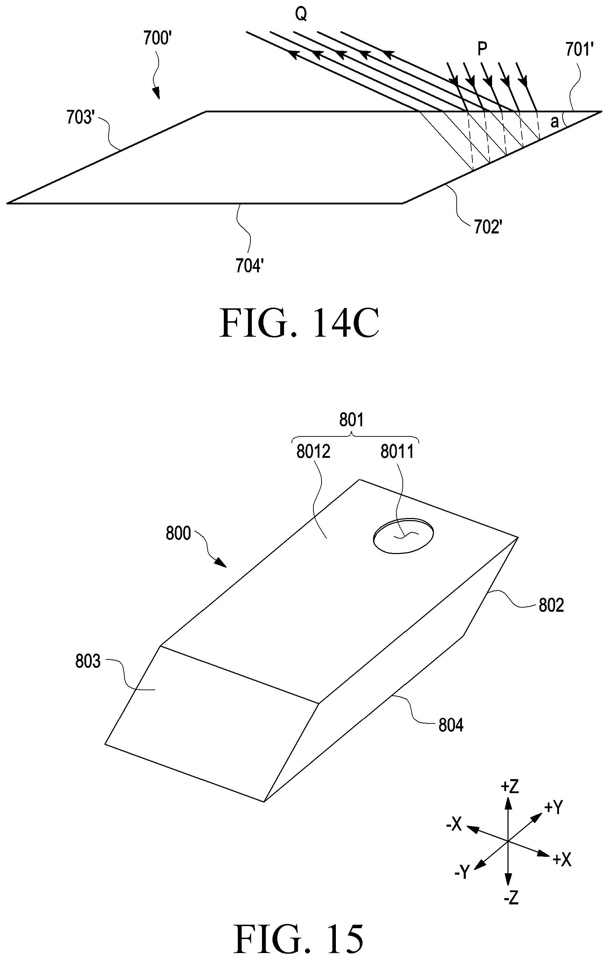

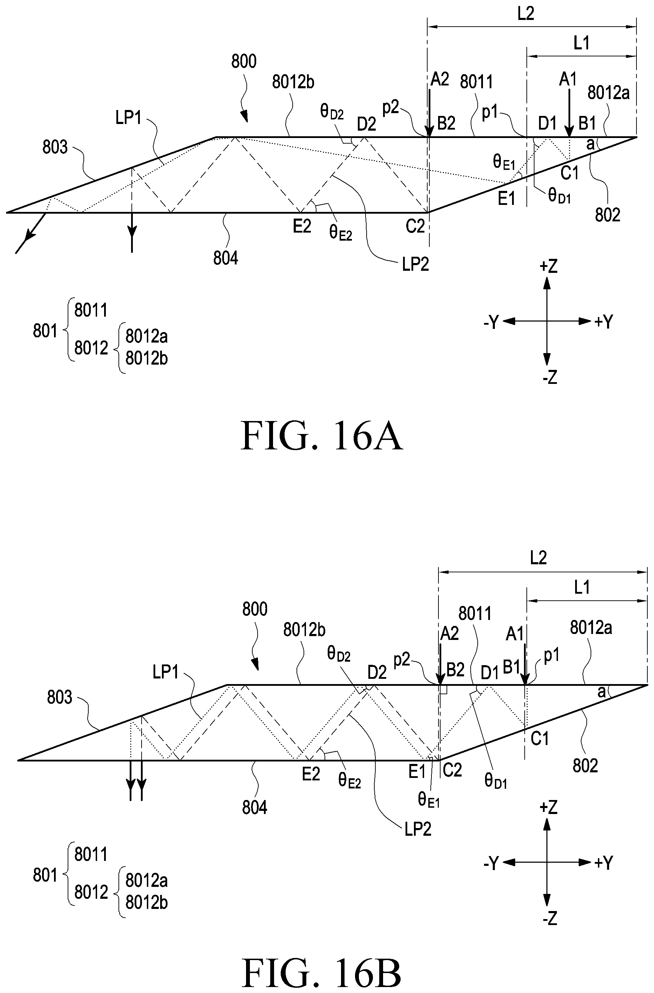

According to an embodiment, the camera module 100 according to an embodiment of the disclosure may configured to enable total reflection (TR), which may be advantageous for the miniaturization of the camera module 100 and the electronic device including the same. With reference to FIGS. 4 to 16B, a detailed description will be given below of the reflective and refractive member 400 for TR (a reflective and refractive member 500 of FIGS. 4, 9A, 9B, and 10, a reflective and refractive member 500' of FIG. 11, a reflective and refractive member 600 of FIG. 12, a reflective and refractive member 600' of FIG. 13, a reflective and refractive member 700 of FIGS. 14A and 14B, a reflective and refractive member 700' of FIG. 14C, and a reflective and refractive member 800 of FIGS. 15 to 16B).

FIG. 4 is a diagram illustrating a state in which light is refracted and/or reflected in a reflective and refractive member according to an embodiment. FIG. 4 is an enlarged view illustrating one end of the reflective and refractive member.

As the reflective and refractive member 500 of FIG. 4, a reflective and refractive member 500 in the same shape as the reflective and refractive member 400 disclosed in FIGS. 2 and 3 may be described as an example. According to an embodiment, the reflective and refractive member 500 may include a first surface 501 on which light is incident and a second surface 502 inclined with respect to the first surface 501. The second surface 502 may include a material (e.g., a mirror) that reflects light. For example, the light-reflecting material on the second surface 502 may be formed by applying a mirror coating to the inner surface of the second surface 502.

Referring to FIG. 4, in a light path LP within the reflective and refractive member 500 (e.g., the reflective and refractive member 300 of FIG. 1 or the reflective and refractive member 400 of FIGS. 2 and 3), light passing through the first surface 501 may be reflected by the second surface 502. Then, after being reflected by the second surface 502, the light travels back toward the first surface 501, partially being emitted to the outside through the first surface 501 and partially being reflected again by the first surface 501. In order to prevent the light from being emitted to the outside through the first surface 501, a TR condition needs to be satisfied at the first surface 501. The TR condition refers to a phenomenon that all light is reflected without being refracted, when the light is incident from a medium with a high refractive index toward a medium with a low refractive index. In the camera module, this may occur because the refractive index of the reflective and refractive member 500 is higher than the refractive index of air inside the camera module.

According to the embodiment illustrated in FIG. 4, for the angle a between the first surface 501 and the second surface 502 of the reflective and refractive member 500, when an incident ray passes through the first surface 501 with an incident angle b, a refracted ray having a refraction angle b' may be formed. The incident angle b and the refraction angle b' may be angles measured with respect to a normal line N1 perpendicular to the first surface 501 of the reflective and refractive member 500. The refracted ray refracted on the first surface 501 may be incident at an angle a-b' with respect to a normal line N2 of the second surface 502 and then reflected at the same angle a-b' while heading toward the first surface 501. Then, the reflected ray heading toward the first surface 501 may be incident at an angle of 2(a-b')+b' with respect to another normal line N3 of the first surface 501 and reflected again from the first surface 501. Regarding the travel path of the light incident on the first surface 501 of the reflective and refractive member 500, it starts from point A outside the reflective and refractive member 500, is primarily refracted and/or reflected (e.g., refracted) at point B of the first surface 501, is secondarily refracted and/or reflected (e.g., reflected) at point C of the second surface 502 to change its direction, and then reaches point D of the first surface 501. Then, some rays may be reflected toward point E and other rays may be refracted at point D of the first surface 501, depending on the refractive index of the reflective and refractive member 500 and the refractive index of external air. When the TR condition is satisfied, only light reflection may occur at point D where a tertiary refraction and/or reflection phenomenon occurs.

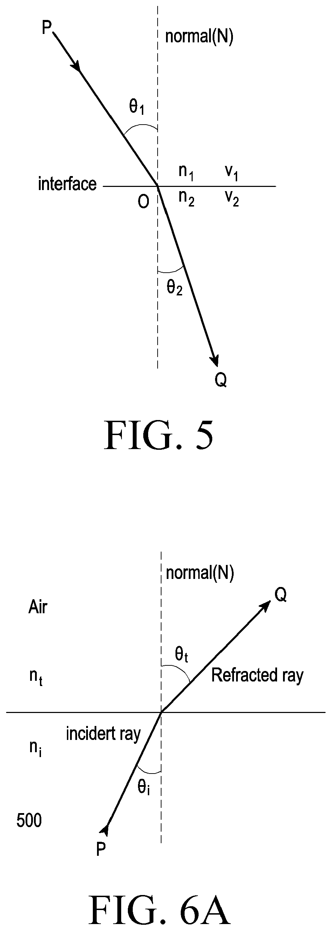

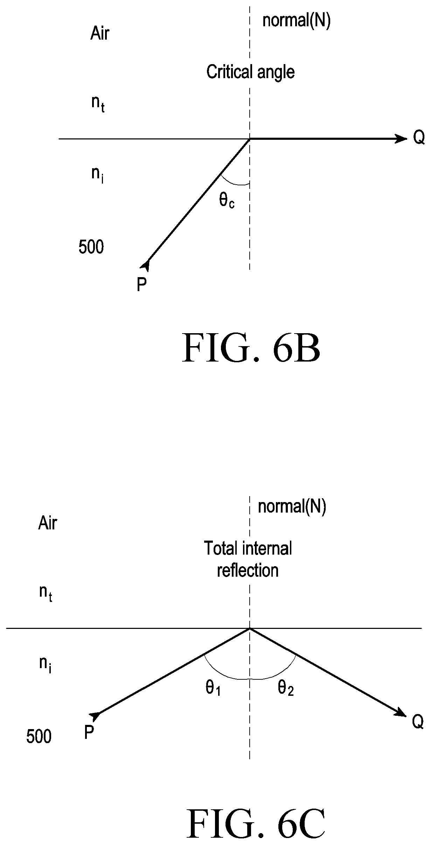

FIG. 5 is a diagram illustrating Snell's Law of refraction of light. FIG. 6A is a diagram illustrating a state in which light is refracted without being totally reflected according to Snell's Law. FIG. 6B is a diagram illustrating a critical state in which TR occurs according to Snell's Law. FIG. 6C is a diagram illustrating a state in which light is totally reflected according to Snell's Law. FIGS. 6A to 6C may illustrate an embodiment in which Snell's Law is applied to the reflective and refractive member 500 included in the camera module.

First, Snell's Law will be described in brief with reference to FIG. 5. In two nonconductive media having different refractive indexes n1 and n2, when the direction of light incident on point O on an interface is PO, the direction of refracted light is OQ, and a normal line is N, the relationship of v₁/v₂ = sin θ₁/sin θ₂ = n₂/n₁ = nλ(1,2) may be established between the medium having a refractive index of n1 and the medium having a refractive index of n2. Herein, v1 is the speed of light in the medium with n1, and v2 is the speed of light in the medium with n2. nλ(1,2) may be defined as the refractive index or relative refractive index of medium 2 with respect to medium 1 at wavelength λ.

When light is incident from a medium with a high refractive index toward a medium with a low refractive index, a TR phenomenon may occur in which all light is reflected without being refracted. Referring to FIGS. 6A to 6C, in the case where the TR phenomenon is applied to an embodiment including a specific medium (e.g., a camera module), when light is incident from a medium with a high refractive index (e.g., the reflective and refractive member 500) toward a medium with a low refractive index (e.g., air outside the reflective and refractive member 500 within the camera module 100), if an incident angle θᵢ is greater than a critical angle θ_{c}, the light is totally reflected from the interface (e.g., FIG. 6C) and does not transmit into the medium with the low refractive index (e.g., the air outside the reflective and refractive member 500 within the camera module 100).

Referring back to FIG. 4 with reference to FIGS. 5 to 6C, a ray P incident at the angle b at point B is refracted to have the angle b' by Snell's Law, the angle between the normal line N2 and the refracted light has a correlation with the angle a, which is the angle between the first surface 501 and the second surface 502 of the reflective and refractive member, and the light is reflected at point C at the angle a-b' with the normal N2. Then, the reflected light is incident at point D at an angle of 2(a-b')+b' with respect to the normal N3. For TR, the ray incident at point D should have an angle greater than or equal to a critical angle derived by the following equation(s).

First, Formula 1 for applying Snell's Law is given as follows.${n}_{i} * sin {θ}_{i} = {n}_{t} * sin {θ}_{t}$

Herein, nᵢ may be the refractive index of the reflective and refractive member 500, and nₜ may be the refractive index of air outside the reflective and refractive member 500 within the camera module 100. Assuming the above equation is under paraxial conditions, sin θᵢ may be substituted with tan θᵢ or vᵢ, and sin θₜ may be substituted with tan θₜ or vₜ. However, the angle θ may be expressed in units of radians (rad). Accordingly, [Formula 1] may be summarized as [Formula 2] below.${n}_{i} * {v}_{i} = {n}_{t} * {v}_{t}$

As illustrated in FIG. 6B, in relation to the critical angle θ_{c}, [Formula 2] may be summarized as [Formula 3] below.$sin {θ}_{c} = {n}_{t} / {n}_{i}$

For the critical angle θ_{c}, this may be summarized again as the following [Formula 4].${θ}_{c} = {sin}^{- 1} \left({n}_{t}/{n}_{i}\right)$

Since the refractive index nₜ of the air outside the reflective and refractive member 500 within the camera module 100 is substantially the refractive index (nₐᵢᵣ=1) of air, [Formula 4] may be summarized as [Formula 5] below.${θ}_{c} = {sin}^{- 1} \left(1/{n}_{i}\right)$

To satisfy the TR condition, the angle 2(a-b')+b' of the reflected light incident at point D should be greater than θ_{c}. That is, the following [Formula 6] should be satisfied.$2 \left(a-b′\right) + b ′ > {θ}_{c}$

[Formula 6] may be expressed as [Formula 7] below.$2 \left(a-b′\right) + b ′ > {sin}^{- 1} \left(1/{n}_{i}\right)$
sin ⁻¹(1/nᵢ) may be expressed as a Taylor expansion by [Formula 8] below.${sin}^{- 1} \left(1/{n}_{i}\right) = {n}_{i} + 1 / 2 * \left({{n}_{i}}^{3}/3\right) + 1 / 2 * 3 / 4 * \left({{n}_{i}}^{5}/5\right) + …$

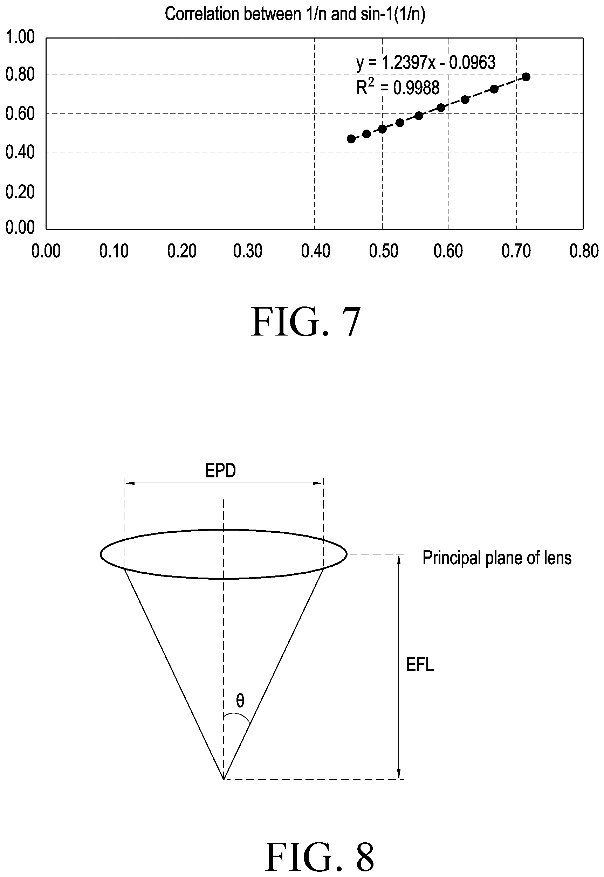

As an optical material applied to the camera module 100, the refractive index of the reflective and refractive member 500 may range from approximately 1.5 to 2.2 depending on the material. For example, when the reflective and refractive member 500 includes a synthetic resin material, it may have a refractive index of 1.5 to 1.78 or less. In another example, when the reflective and refractive member 500 includes a glass material, it may have a refractive index of 1.79 to 2.2 or less. A correlation function as illustrated in FIG. 7 may be obtained by summarizing values derived by substituting such refractive indexes into Formula 8.

FIG. 7 is a graph illustrating the correlation between 1/n (e.g., 1/nᵢ) and an inverse sine function (e.g., sin⁻¹(1/nᵢ)).

The following [Table 1] illustrates 1/nᵢ values and the inverse sine function (e.g., sin⁻¹(1/nᵢ)) derived using Taylor series, for refractive indexes nᵢ in the range of approximately 1.5 to 2.2. When the horizontal axis (x axis) is 1/nᵢ and the vertical axis (y axis) is sin⁻¹(1/nᵢ), the data in [Table 1] may be represented as illustrated in FIG. 7.

**[Table 1]**

| nᵢ | 1/nᵢ | sin⁻¹(1/nᵢ) |
|---|---|---|
| 1.5 | 0.67 | 0.73 |
| 1.6 | 0.63 | 0.68 |
| 1.7 | 0.59 | 0.63 |
| 1.8 | 0.56 | 0.59 |
| 1.9 | 0.53 | 0.55 |
| 2 | 0.50 | 0.52 |
| 2.1 | 0.48 | 0.50 |
| 2.2 | 0.45 | 0.47 |

Connecting the traces of the data in [Table 1] plotted on the x-y coordinate axes of FIG. 7 results in a graph resembling a linear function, which may be approximated as y = 1.2397x - 0.0963. A correlation coefficient function between a horizontal axis displacement 1/nᵢ and a vertical axis displacement sin⁻¹(1/nᵢ) in FIG. 7 may be expressed as a determination coefficient R². For example, as illustrated in FIG. 7, when the refractive index of the reflective and refractive member 500 is in the range of approximately 1.5 to 2.2, the correlation coefficient R² is 0.9988, confirming a very high positive correlation. Accordingly, sin⁻¹(1/nᵢ) in [Formula 8] may be expressed as an approximation equation like [Formula 9] below.${sin}^{- 1} \left(1/{n}_{i}\right) ≒ C 1 * \left(1/{n}_{i}\right) + C 2$

C1 and C2 may refer to the coefficient of the linear equation and the constant, respectively, when the inverse sine function for the reciprocal of the refractive index of the reflective and refractive member 500 is expressed as a linear equation for the reciprocal of the reflective and refractive member 500. For example, FIG. 7 illustrates C1 as 1.2397 and C2 as - 0.0963.

Substituting [Formula 9] into [Formula 7] results in [Formula 10] below.$2 \left(a-b′\right) + b ′ > C 1 * \left(1/{n}_{i}\right) + C 2$

Rearranging [Formula 10] into an equation for the refractive index of the reflective and refractive member 500 results in [Formula 11] below.${n}_{i} \geq \frac{C 1 + b}{2 a - C 2}$

An equation for a refractive index required for TR occurrence in the reflective and refractive member 500 may be defined as [Formula 11]. In [Formula 11], the expression ' $\frac{C 1 + b}{2 a - C 2}$' may also be referred to as a total reflection function (TRF). [Formula 11] may be referred to as [Formula 1] in the following claims, and in [Formula 11], ' $\frac{C 1 + b}{2 a - C 2}$' may also be referred to as [Formula 9] in the following claims. Referring to the correlation equation in [Table 1] and/or FIG. 7, C1 and C2 may be derived as illustrated in [Formula 12] and [Formula 13] below.$1.1 < C 1 < 1.4$$- 0.3 < C 2 < + 0.3$

For example, an embodiment in which C1 = 1.2397 and C2 = -0.0963 is illustrated in FIG. 7. The upper and lower limits of C1 in Formula 12 and the upper and lower limits of C2 may correspond to upper and lower limits corresponding to a range where the determination coefficient R² of the correlation coefficient function is 0.90 or higher.

According to an embodiment, the cause of the reflection of light refracted at point B at point C at an angle of a-b' may be, but is not necessarily limited to, a reflective material such as a mirror formed on the second surface 502. According to another example, the reflective and refractive member 500 may achieve TR at point C as well as at point D. According to another embodiment, the reflective and refractive member 500 may achieve TR at other points not shown in addition to point C and point D. In this case, the camera module 100 of the disclosure may be referred to as a camera module implementing multi total reflection (MTR).

FIG. 8 is a schematic diagram illustrating the relationship between an F-number and a numerical aperture (N.A).

In the reflective and refractive member 500 of the disclosure, TR may occur only when the incident angle b (e.g., the incident angle b in FIG. 4) of an incident ray is within a range less than or equal to a specified angle. Referring to FIG. 8, the incident angle b may be expressed as an equation related to a major factor F-number (Fno) of an optical system.

Referring to FIG. 8, the F-number is a parameter for gauging the brightness of an optical system and may be expressed as [Formula 14] below.$Fno = f / D$

Fno represents the F-number, f represents the effective focal length (EFL) of the optical system, and D represents an entrance pupil diameter (EPD).

Fno may be depicted as the central light flux of a lens, and thus may be expressed by the following [Formula 15] related to an aperture through a simple approximation.$Fno = 1 / \left(2*N.A\right)$

N.A (numerical aperture) represents the numerical aperture. When N.A is expressed using a maximum incident angle θ of a ray entering the lens aperture among rays passing through the focus of a lens disposed in a medium with a refractive index nₜ, it may be expressed as [Formula 16] below.$N . A = {n}_{t} ∗ sin θ$

When the value of θ is small, sinθ may be approximated as θ, and thus [Formula 16] may be summarized as [Formula 17] below.$N . A = {n}_{t} ∗ θ$

Based on [Formula 16] and [Formula 17], [Formula 15] may be summarized as [Formula 18] below.$Fno = 1 / \left(2*{n}_{t}*θ\right)$

Since a medium having the refractive index nₜ around the lens is air, nₜ may be substituted with the refractive index (nₐᵢᵣ=1) of air. Further, [Formula 18] may be summarized as [Formula 19] or [Formula 20] below by defining the maximum incident angle θ as corresponding to the incident angle b on the reflective and refractive member 500.$Fno = 1 / \left(2*b\right)$$b = 1 / \left(2*Fno\right)$

A minimum refractive index of the reflective and refractive member 500 required for TR occurrence according to Fno may be derived through [Formula 11] by substituting [Formula 19] or [Formula 20] into [Formula 11].

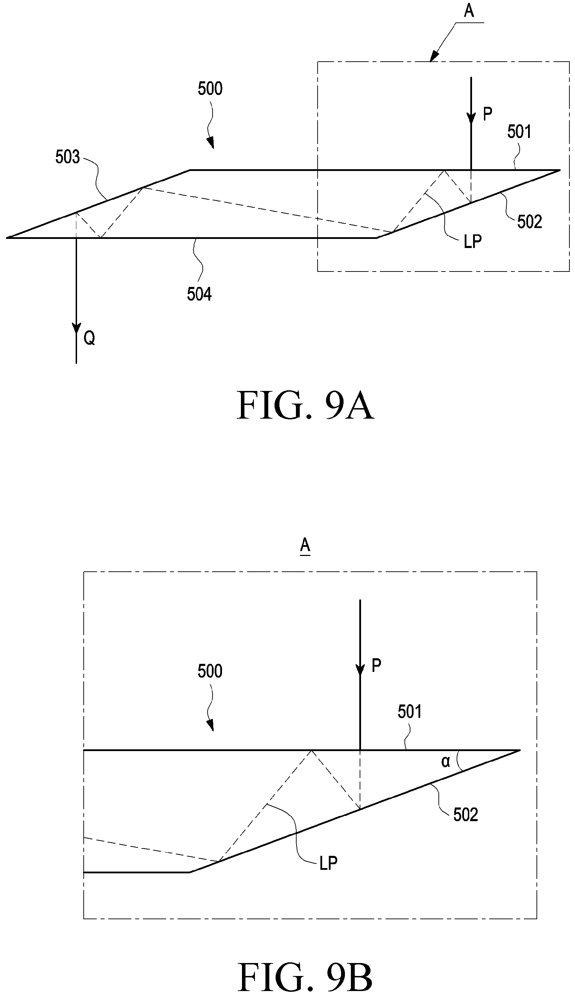

FIG. 9A is a schematic diagram illustrating a light path LP of light that is incident on and then emitted from a reflective and refractive member. FIG. 9B is an enlarged view illustrating a portion A of the reflective and refractive member. FIG. 10 is a diagram illustrating a state in which light incident on a reflective and refractive member is emitted back from a first surface. FIG. 11 is a diagram illustrating a state in which light incident on a reflective and refractive member is totally reflected from a first surface.

Referring to FIG. 9A, the reflective and refractive member 500 (e.g., the reflective and refractive member 300 of FIG. 1 or the reflective and refractive member 400 of FIGS. 2 and 3) includes the first surface 501 (e.g., the first surface 301 of FIG. 1 or the first surface 401 of FIGS. 2 and 3), the second surface 502 (e.g., the second surface 302 of FIG. 1 or the second surface 402 of FIGS. 2 and 3), a third surface 503 (e.g., the fifth surface 305 of FIG. 1 or the third surface 403 of FIGS. 2 and 3), and a fourth surface 504 (e.g., the sixth surface 306 of FIG. 1 or the fourth surface 404 of FIGS. 2 and 3).

Referring to FIGS. 9A and 9B, it is illustrated that incident light P is incident perpendicularly to the first surface 501 of the reflective and refractive member 500, and emitted light Q is output. In this case, the requirement for TR when the incident light P is incident may be determined by the angle (hereinafter, referred to as 'included angle a') between the first surface 501 and the second surface 502. In contrast, when the incident light P is incident obliquely with respect to the first surface 501 as illustrated in FIGS. 10 and 11, the TR requirement may be determined according to the included angle a of the reflective and refractive member 500 together with an incident angle b with respect to a normal line N of the first surface 501.

With reference to FIGS. 10 and 11, the TR requirement according to the incident angle b of light incident on the reflective and refractive member 500 and the included angle a of the reflective and refractive member 500 will be described below in detail.

Fno may be pre-specified according to optical performance (or specifications) required for the camera module 100. According to an embodiment, the camera module 100 may be provided, in which as Fno decreases, brightness increases and as Fno increases, the brightness decreases.

For example, when Fno is 2.8, the corresponding incident angle b calculated in degrees rather than radians (rad), is 10.23°. In this case, a minimum refractive index according to various embodiments of the included angle a of the reflective and refractive member 500 may be as illustrated in [Table 2] below.

Various embodiments for the included angle a of the reflective and refractive member 500 of the disclosure may be given as [Formula 21] below. Various embodiments for light incident on the reflective and refractive member 500 may be given as [Formula 22] below.$10 < a < 50$ $b < 45$

For example, when the included angle a in [Formula 21] is greater than or equal to 50, the height of the reflective and refractive member 500 is large, which may make the overall thickness of the camera module excessively large. For example, when the included angle a in [Formula 21] is less than or equal to 10, it may be difficult to manufacture the reflective and refractive member 500, and the risk of damage may be high. Regarding Formula 22, when the reflective and refractive member 500 is included in the camera module, the incident angle b of light passing through, for example, the lens assembly and incident on the reflective and refractive member 500 may be set to less than 45 degrees.

**[Table 2]**

| Included angle | Incident angle according to Fno | Minimum refractive index | Included angle | Incident angle according to Fno | Minimum refractive index |
|---|---|---|---|---|---|
| a | b | n | a | b | n |
| 45 | 10.23° | 0.85 | 22 | 10.23° | 1.64 |
| 40 | 10.23° | 0.95 | 20 | 10.23° | 1.79 |
| 35 | 10.23° | 1.08 | 18 | 10.23° | 1.96 |
| 30 | 10.23° | 1.24 | 16 | 10.23° | 2.17 |
| 28 | 10.23° | 1.32 | 14 | 10.23° | 2.43 |
| 26 | 10.23° | 1.41 | 12 | 10.23° | 2.75 |
| 24 | 10.23° | 1.52 | 10 | 10.23° | 3.19 |

According to [Table 2], it may be identified that as the included angle of the reflective and refractive member decreases, the minimum refractive index for TR occurrence gradually increases. For example, as illustrated in [Table 2], when the incident angle b according to Fno is 10.23° and the included angle a of the reflective and refractive member 500 is 45 degrees, the minimum refractive index required for the medium of the reflective and refractive member 500 to achieve TR inside the reflective and refractive member 500 is 0.85. That is, under the 45-degree condition, the reflective and refractive member 500 should have a refractive index of at least 0.85 to satisfy the TR condition. As mentioned above, the reflective and refractive member 500 of the disclosure may be formed of a medium having a refractive index between approximately 1.5 and 2.2. Therefore, according to an embodiment of the disclosure, when the incident angle b according to Fno is 10.23° and the included angle of the reflective and refractive member 500 is 45 degrees, TR may occur in the light path LP of a ray incident on the reflective and refractive member 500.

The embodiments of FIGS. 9A to 11 illustrate, for example, a case where the included angle a of the reflective and refractive member 500 is 20°. When the incident angle b according to Fno is 10.23° for the included angle a of 20°, the minimum refractive index required for the medium to achieve TR may be 1.79. Therefore, it may be difficult to satisfy the TR requirement with a material such as synthetic resin typically having a refractive index of 1.78 or less. FIG. 10 illustrates an embodiment in which the included angle a of the reflective and refractive member 500 is 20°, the incident angle b according to Fno is 10.23°, and the refractive index of the reflective and refractive member 500 is 1.77. Referring to FIG. 10, when the reflective and refractive member 500 fails to satisfy the minimum refractive index, the light path LP may include the emitted light Q that is emitted to the outside through the first surface 501.

FIG. 11 relates to a reflective and refractive member 500' including a first surface 501' and a second surface 502', illustrating an embodiment in which the reflective and refractive member 500' has a refractive index of 1.79, which is slightly larger than the refractive index of the reflective and refractive member 500 in FIG. 10. Referring to FIG. 11, as the reflective and refractive member 500' satisfies the minimum refractive index, the light path LP may be totally reflected on the first surface 501'.

For example, regarding the reflective and refractive members 500 and 500' having predetermined refractive indexes, when the incident angle b of the light P incident on the reflective and refractive members 500 and 500' is greater than a pre-specified value, or additionally or alternatively, when the included angle a of the reflective and refractive members 500 and 500' is excessively small, TR may not occur within the reflective and refractive member 500 (or on the first surface 501), as illustrated in FIG. 10.

According to an embodiment, the reflective and refractive member 500 may have an Abbe number that satisfies the following [Formula 23].$25 < Vd_ 1 < 95$

Vd_1 may be the Abbe number of the reflective and refractive member 500 (e.g., the reflective and refractive member 300 in FIG. 1 or the reflective and refractive member 400 in FIGS. 2 and 3). For example, when the reflective and refractive member 300 includes a plurality of reflective and refractive members 300-1 and 300-2 as in the embodiment of FIG. 1, it may refer to the Abbe number of the reflective and refractive member 300-2 closest to the image side I. When the reflective and refractive member 500 is disposed between the lens assembly and the imaging plane, it may be affected by aberrations such as curvature of field and chromatic aberration. For example, when the Abbe number Vd_1 of the reflective and refractive member 500 is 95 or higher, it is advantageous for correcting chromatic aberration. However, the reflective and refractive member 500 of a relatively soft material is used, making it difficult to manage an assembly and manufacturing process. On the contrary, when the Abbe number Vd_1 is less than 25, a hard material may be used for the reflective and refractive member 500, but appropriate chromatic aberration correction may be difficult.

With reference to FIGS. 12 to 14C, the requirements for TR according to the incident angle b and the included angle a of the reflective and refractive member 500 will be described below in more detail.

FIG. 12 is a diagram illustrating a state in which light incident on a reflective and refractive member having a first included angle and a first refractive index is totally reflected and emitted. FIG. 13 is a diagram illustrating a state in which light incident on a reflective and refractive member having the first included angle and a second refractive index is emitted back from a first surface.

Referring to FIGS. 12 and 13, reflective and refractive members 600 and 600' (e.g., the reflective and refractive member 300 of FIG. 1, the reflective and refractive member 400 of FIGS. 2 and 3, or the reflective and refractive members 500 and 500' of FIGS. 4 and FIGS. 9A to 11) may include LP first surfaces 601 and 601' (e.g., the first surface 301 of the reflective and refractive member 300 of FIG. 1, the first surface 401 of the reflective and refractive member 400 of FIGS. 2 and 3, or the first surface 501 of the reflective and refractive members 500 and 500' of FIGS. 4 and FIGS. 9A to 11), second surfaces 602 and 602' (e.g., the second surface 302 of the reflective and refractive member 300 of FIG. 1, the second surface 402 of the reflective and refractive member 400 of FIGS. 2 and 3, or the second surface 502 of the reflective and refractive members 500 and 500' of FIGS. 4 and FIGS. 9A to 11), third surfaces 603 and 603' (e.g., the fifth surface 305 of the reflective and refractive member 300 of FIG. 1, the third surface 403 of the reflective and refractive member 400 of FIGS. 2 and 3, or the third surface 503 of the reflective and refractive members 500 and 500' of FIGS. 4 and FIGS. 9A to 11), and fourth surfaces 604 and 604' (e.g., the sixth surface 306 of the reflective and refractive member 300 of FIG. 1, the fourth surface 404 of the reflective and refractive member 400 of FIGS. 2 and 3, or the fourth surface 504 of the reflective and refractive member 500 of FIGS. 4 and FIGS. 9A to 11).

For example, in the embodiments of FIGS. 12 and 13, the first included angle may be 30°. However, this may be variously changed according to embodiments. In the embodiments of FIGS. 12 and 13, when the Abbe number is 40 and the required Fno is 2.8, the TRF may be 1.24. In this case, FIG. 12 may illustrate a light path LP when the refractive index nᵢ of the reflective and refractive member 600 is 1.7, and FIG. 13 may illustrate a light path LP when the refractive index nᵢ of the reflective and refractive member 600 is 1.15. Referring to FIGS. 12 and 13, it may be identified that TR occurs when the reflective and refractive member 600 has a refractive index greater than the TRF (e.g., FIG. 12), and TR does not occur when it has a refractive index smaller than the TRF (e.g., FIG. 13).

FIG. 14A is a diagram illustrating a state in which light incident at a first angle on a reflective and refractive member having a second included angle and a third refractive index is totally reflected and emitted. FIG. 14B is a diagram illustrating a state in which light incident at a second angle on a reflective and refractive member having the second included angle and the third refractive index is totally reflected and emitted. FIG. 14C is a diagram illustrating a state in which light incident at the second angle on a reflective and refractive member having the second included angle and a fourth refractive index is emitted back through the first surface.

Referring to FIGS. 14A to 14C, reflective and refractive members 700 and 700' (e.g., the reflective and refractive member 300 of FIG. 1, the reflective and refractive member 400 of FIGS. 2 and 3, the reflective and refractive members 500 and 500' of FIGS. 4 and FIGS. 9A to 11, or the reflective and refractive members 600 and 600' of FIGS. 12 and 13) may include first surfaces 701 and 701' (e.g., the first surface 301 of FIG. 1, the first surface 401 of FIGS. 2 and 3, the first surfaces 501 and 501' of FIGS. 4 and FIGS. 9A to 11, or the first surfaces 601 and 601' of FIGS. 12 and 13), second surfaces 702 and 702' (e.g., the second surface 302 of FIG. 1, the second surface 402 of FIGS. 2 and 3, the second surface 502 of FIGS. 4 and FIGS. 9A to 11, or the second surfaces 602 and 602 of FIGS. 12 and 13), third surfaces 703 and 703' (e.g., the fifth surface 305 of FIG. 1, the third surface 403 of FIGS. 2 and 3, the third surface 503 of FIGS. 4 and FIGS. 9A to 11, or the third surfaces 603 and 603' of FIGS. 12 and 13), and fourth surfaces 704 and 704' (e.g., the sixth surface 306 of FIG. 1, the fourth surface 404 of FIGS. 2 and 3, the fourth surface 504 of FIGS. 4 and FIGS. 9A to 11, or the fourth surfaces 604 and 604' of FIGS. 12 and 13).

For example, the included angle a of the reflective and refractive member 700 may be expressed as a second included angle a' in the embodiments of FIGS. 14A to 14C. For example, in the embodiments of FIGS. 14A to 14C, the second included angle a' may be 25°. However, this may be changed in various ways according to embodiments. In the embodiments of FIGS. 14A to 14C, when the Abbe number is 30 and the required Fno is 2.8, the TRF may be 1.46. In this case, FIGS. 14A and 14B may illustrate a light path LP in the reflective and refractive member 700 having a refractive index nᵢ of 1.75, and FIG. 14C may illustrate a light path LP in the reflective and refractive member 700' having a refractive index nᵢ of 1.35. Referring to FIGS. 14A and 14B, it may be identified that when the refractive index nᵢ of the reflective and refractive member 700 is 1.75, TR occurs within the reflective and refractive member 700 not only when incident light P is incident perpendicularly to the first surface 701 but also when it is incident obliquely. On the contrary, referring to FIGS. 14B and 14C, for obliquely incident light P, it may be identified that TR occurs when the reflective and refractive members 700 and 700' have refractive indexes greater than the TRF (e.g., the reflective and refractive member 700 of FIG. 14B), and TRF does not occur when they have refractive indexes smaller than the TRF (e.g., the reflective and refractive member 700' of FIG. 14C).

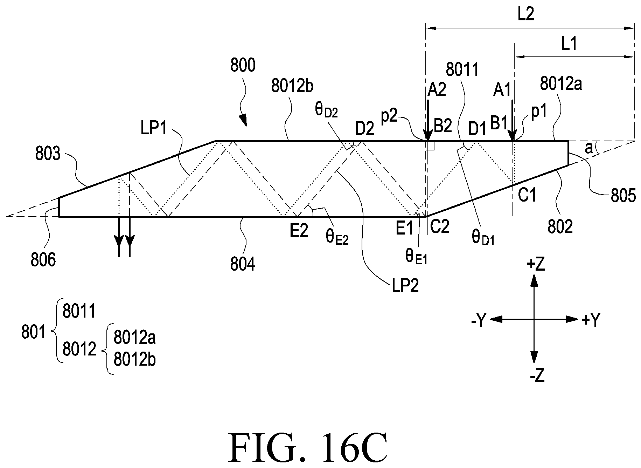

FIG. 15 is a perspective view illustrating a reflective and refractive member including an effective incident area. FIG. 16A is a diagram illustrating travel paths of light passing through an ineffective incident area and light passing through an effective incident area. FIG. 16B is a diagram illustrating a travel path of light passing through an effective incident area. FIG. 16C is a diagram illustrating a reflective and refractive member including a cut surface.

Referring to FIGS. 15 to 16C, a reflective and refractive member 800 (e.g., the reflective and refractive member 300 of FIG. 1, the reflective and refractive member 400 of FIGS. 2 and 3, the reflective and refractive members 500 and 500' of FIGS. 4 and FIGS. 9A to 11, the reflective and refractive members 600 and 600' of FIGS. 12 and 13, or the reflective and refractive members 700 and 700' of FIGS. 14A to 14C) may include a first surface 801 (e.g., the first surface 301 of FIG. 1, the first surface 401 of FIGS. 2 and 3, the first surfaces 501 and 501' of FIGS. 4 and FIGS. 9A to 11, the first surfaces 601 and 601' of FIGS. 12 and 13, or the first surfaces 701 and 701' of FIGS. 14A to 14C), a second surface 802 (e.g., the second surface 302 of FIG. 1, the second surface 402 of FIGS. 2 and 3, the second surface 502 of FIGS. 4 and FIGS. 9A to 11, the second surfaces 602 and 602' of FIGS. 12 and 13, or the second surfaces 702 and 702' of FIGS. 14A to 14C), a third surface 803 (e.g., the fifth surface 305 of FIG. 1, the third surface 403 of FIGS. 2 and 3, the third surface 503 of FIGS. 4 and FIGS. 9A to 11, the third surfaces 603 and 603' of FIGS. 12 and 13, or the third surfaces 703 and 703' of FIGS. 14A to 14C), and a fourth surface 804 (e.g., the sixth surface 306 of FIG. 1, the fourth surface 404 of FIGS. 2 and 3, the fourth surface 504 of FIGS. 4 and FIGS. 9A to 11, the fourth surfaces 604 and 604' of FIGS. 12 and 13, or the fourth surfaces 704 and 704' of FIGS. 14A to 14C).

Referring to FIG. 15, according to an embodiment, the first surface 801 may include a first area 8011 and a second area 8012. The first area 8011 may be an incident area where light is incident. As described above in the description of the embodiments of FIGS. 2 and 3, when light passing through the first area 8011 is reflected from the second surface 802 and reaches the first area 8011 again, the light may be reflected even in the first area 8011.

The first area 8011 may be disposed at a position corresponding to a lens assembly (e.g., the lens assembly 200 of FIGS. 1 to 3) and have a circular shape with a specific diameter. According to an embodiment, the second area 8012 may be the remaining area of the first surface 801 other than the first area 8011. The second area 8012 may have a shape surrounding the first area 8011. According to an embodiment, the first area 8011 may be disposed at a position spaced from an end (e.g., a vertex of an edge) of the first surface 801 by a predetermined distance. According to an embodiment, the first area 8011 may be referred to as an effective incident area (EIA). With reference to FIGS. 16A and 16B, the EIA will be described below in detail.

Referring to FIG. 16A, light is shown as being incident at two points through the first surface 801. In a first light path LP1 which is a path of light incident on the second area 8012 other than the first area 8011 which is the EIA, light may be incident along a path of point A1 and point B1 and emitted through point C1, point D1, and point E1. In a second light path LP2 which is a path of light incident on the first area 8011 which is the EIA, light may be incident along a path of point A2 and point B2 and emitted through point C2, point D2, and point E2.

The first light path LP1 may have a path in which light is incident through the first surface 801, then reflected (primarily reflected) from the second surface 802, re-reflected (secondarily reflected) from the first surface 801, and then reflected again (tertiarily reflected) from the second surface 802. For example, as in the first light path LP1 illustrated in FIG. 16A, when light is emitted through the fourth surface 804, it may be emitted in an oblique direction rather than a direction perpendicular to the fourth surface 804 in a light path (hereinafter, referred to as a 'path of tertiary reflection on the second surface 802') having a path in which light is secondarily reflected from the first surface 801 and then tertiarily reflected from the second surface 802. Regarding the angles of the light path when light is reflected again from the second surface 802 after being re-reflected from the first surface 801 in the first light path LP1, an angle θ_{D1} at point D1 is formed to be different from an angle θ_{E1} at point E1. The path of tertiary reflection on the second surface 802 may be formed irregularly.

The second light path LP2 may have a path (hereinafter, referred to as a 'path of tertiary reflection on the fourth surface 804') in which light is incident through the first surface 801, then reflected (primarily reflected) from the second surface 802, re-reflected (secondarily reflected) from the first surface 801, and then reflected again (tertiarily reflected) from the fourth surface 802. For example, as in the second light path LP2 illustrated in FIG. 16A, when light is emitted through the fourth surface 804, it may be emitted in a direction perpendicular to the fourth surface 804 in the light path (hereinafter, referred to as the 'path of tertiary reflection on the fourth surface 804') having a path in which light is secondarily reflected from the first surface 801 and then tertiarily reflected from the fourth surface 804. Regarding the angles of the light path when light is reflected from the fourth surface 804 after being re-reflected from the first surface 801 in the second light path LP2, an angle θ_{D2} at point D2 may be formed to be identical to an angle θ_{E2} at point E2. That is, in the second light path LP2, an angle at which light is re-reflected from the first surface 801 and an angle at which the light is subsequently reflected again may be identical. In the embodiment of FIG. 16A, the second light path LP2 may be regular compared to the first light path LP1. According to an embodiment, in designing the reflective and refractive member 800, the second light path LP2 having such a regular path may be set as a normal light path. The camera module may be designed optimally for the arrangement and/or shape of the reflective and refractive member to enhance optical performance based on the normal light path.

According to an embodiment, in the reflective and refractive member 800 of the disclosure, the first area 8011 where light is incident may be set as an EIA which has a light path in which light is secondly reflected from the first surface 801 and then tertiarily reflected from the fourth surface 804. Accordingly, all light incident on the first area 8011 may be included in the normal light path which is a regular light path. According to an embodiment, the first area 8011 may have a first end p1 at a position spaced from a vertex between the first surface 801 and the second surface 802 by a first distance L1, and a second end p2 at a position spaced from the vertex between the first surface 801 and the second surface 802 by a second distance L2. In order for all light paths of light incident on the first area 8011 to be included in the regular normal light path, the position of the first end p1 may be set to a position which enables formation of a path in which light incident on the first area 8011 is tertiarily reflected from the fourth surface 804. Alternatively, the position of the first end p1 may be set to a position which enables formation of a path in which the angles of the secondary reflection and the tertiary reflection of light incident on the first area 8011 are identical. According to an embodiment, the position of the second end p2 may be set to a position intersecting with an imaginary line (e.g., a dash-dotted line in FIG. 16A) drawn perpendicular to the first surface 801 from a vertex between the second surface 802 and the fourth surface 804.

According to an embodiment, the second area 8012 may include an area of the first surface 801 other than the first area 8011. Referring to FIG. 16A, the second area 8012 may include a (2-1)^{th} area 8012a close to the vertex between the first surface 801 and the second surface 802 with respect to the first area 8011. The second area 8012 may also include a (2-2)^{th} area 8012b located on the opposite side of the (2-1)^{th} area 8012a with respect to the first area 8011. According to an embodiment, even if light is incident on the (2-1)^{th} area 8012a, a light path may be formed irregularly. According to an embodiment, a portion of the reflective and refractive member 500 corresponding to the (2-1)^{th} area 8012a may be processed (e.g., cut). An example of the reflective and refractive member 500 with a processed portion is illustrated in FIG. 16C.

Referring to FIG. 16B, similar to the embodiment of FIG. 16A, light is also shown as being incident at two points through the first surface 801 in the embodiment of FIG. 16B. In a first light path LP1 which is a path of light incident on the first area 8011 being the EIA, light may be incident along a path of point A1 and point B1 and emitted through point C1, point D1, and point E1. In a second light path LP2 which is a path of light incident on the first area 8011 being the EIA, light may be incident along a path of point A2 and point B2 and emitted through point C2, point D2, and point E2. In the embodiment of FIG. 16B, light is shown as being incident through the first area 8011 which is the EIA in both the first light path LP1 and the second light path LP2. In this case, it may be identified that an angle θ_{D1} at point D1 is set identical to an angle θ_{E1} at point E1 in the first light path LP1, and an angle θ_{D2} at point D2 is set identical to an angle θ_{E2} at point E2 in the second light path LP2.

In summary of the embodiments of FIGS. 16A and 16B, the reflective and refractive member 800 according to an embodiment of the disclosure may include regular and irregular paths of light incident into the reflective and refractive member 800. An incident area of light leading to the regular path in the reflective and refractive member 800 may be specified as an EIA. According to an embodiment, the EIA may be set as the first area 8011. The first area 8011 may be surrounded by the second area 8012. It may be determined whether the light incident on the reflective and refractive member 800 has a regular light path, based on light incident perpendicularly to the first surface 801. According to an embodiment, the reflective and refractive member 800 may satisfy the following [Formula 24].$p 1 \leq EIA$

EIA may represent the EIA in which light incident on the reflective and refractive member 800 forms a regular light path. p1 may be a first end of the first area 8011 corresponding to the EIA. According to an embodiment, p1 may correspond to a point closest to the vertex between the first surface 801 and the second surface 802, where light incident on the reflective and refractive member 800 has a regular light path. For example, when the EIA of light incident on the member 800 is set smaller than p1, the light incident on the reflective and refractive member 800 may have an irregular light path and/or oblique light may be emitted from the exit surface of the reflective and refractive member 800.

According to an embodiment, the reflective and refractive member 800 may satisfy the following [Formula 25].$p 1 \leq EIA \leq p 2$

p2 may be a second end of the first area 8011 corresponding to the EIA. According to an embodiment, p2 may be set to a position intersecting with an imaginary line (e.g., the dash-dotted line in FIG. 16A) drawn perpendicular to the first surface 801 from the vertex between the second surface 802 and the fourth surface 804.

Various embodiments for the included angle a of the reflective and refractive member 800 of the disclosure may be given as [Formula 26] below.$10 < a < 30$

For example, when the included angle a in [Formula 26] is greater than or equal to 30, the angles of the secondary reflection and the tertiary reflection of light incident on the first area 8011 of the reflective and refractive member 800 may not be formed to be identical. For example, when the included angle a in [Formula 26] is less than or equal to 10, it may be difficult to manufacture the reflective and refractive member 800, and the risk of damage may be high.

Referring to FIG. 16C, a portion of the reflective and refractive member 500 may be processed (e.g., cut). The size of the reflective and refractive member 500 may be reduced or the possibility of damage during handling may be decreased by processing (e.g., cutting) the portion of the reflective and refractive member 500. The reflective and refractive member 500 may include a plurality of cut surfaces depending on an embodiment. According to an embodiment, the reflective and refractive member 500 may include a cut surface (e.g., a first cut surface 805) formed by removing a vertex portion between the first surface 801 and the second surface 802. To the same effect, it may also include a cut surface (e.g., a second cut surface 806) formed by removing a vertex portion between the third surface 803 and the fourth surface 804.

According to an embodiment, light incident into the reflective and refractive member may be prevented from leaking to the outside by masking or mirror-coating at least a portion of the first surface 801, at least a portion of the second surface 802, at least a portion of the third surface 803, at least a portion of the fourth surface 804, and/or the cut surface (e.g., the first cut surface 805 and/or the second cut surface 806).

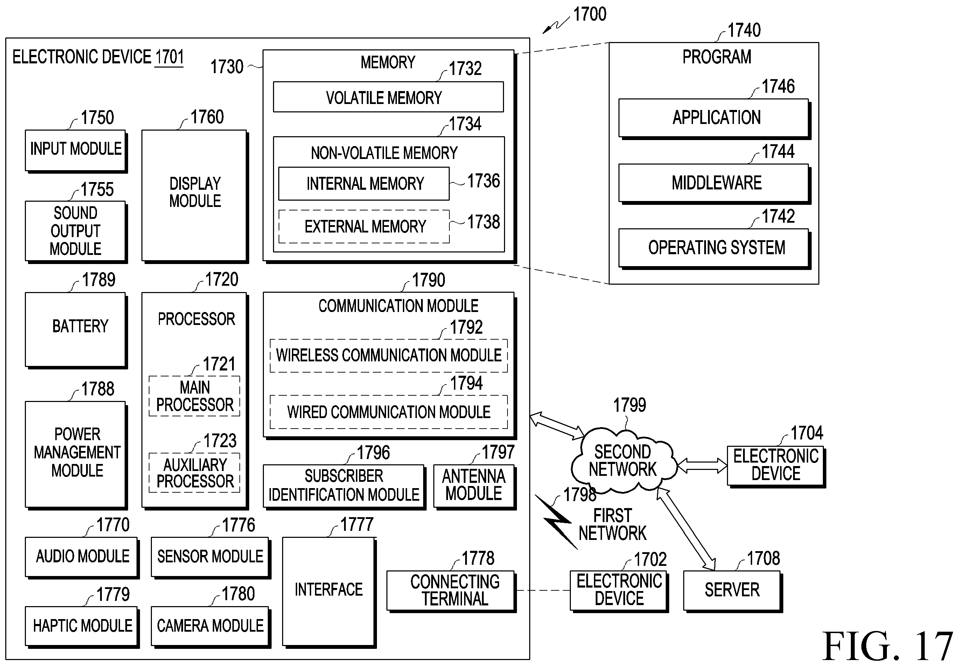

FIG. 17 is a block diagram illustrating an electronic device 1701 (e.g., the camera module 100 of FIGS. 1 to 3) (e.g., an optical device) in a network environment 1700 according to various embodiments.

Referring to Fig. 17, the electronic device 1701 (e.g., an optical device) in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module (SIM) 1796, or an antenna module 1797. In some embodiments, at least one of the components (e.g., the display device 1760 or the camera module 1780) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to one embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thererto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, a HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to one embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example.

The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

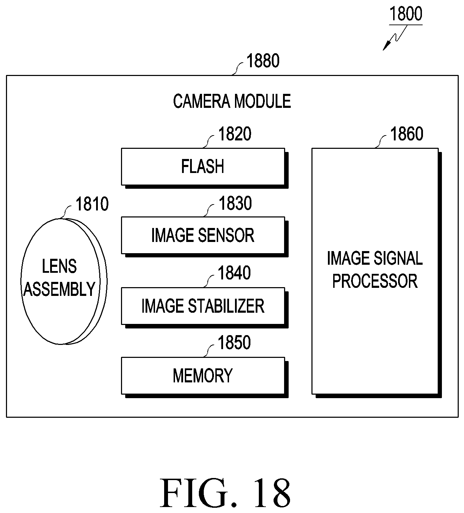

FIG. 18 is a block diagram 1800 illustrating a camera module 1880 according to various embodiments.

Referring to FIG. 18, the camera module 1880 (e.g., the camera module 100 of FIGS. 1 to 3 and/or the camera module 1780 of FIG. 17) may include a lens assembly 1810 (e.g., the lens assembly 200 of FIGS. 1 to 3), a flash 1820, an image sensor 1830 (e.g., IS), an image stabilizer 1840, memory 1850 (e.g., buffer memory) (e.g., the memory 1730 of FIG. 17), or an image signal processor 1860. The lens assembly 1810 may collect light emitted or reflected from an object whose image is to be taken. The lens assembly 1810 may include one or more lenses. According to an embodiment, the camera module 1880 may include a plurality of lens assemblies 1810. In such a case, the camera module 1880 may form, for example, a dual camera, a 360-degree camera, or a spherical camera. Some of the plurality of lens assemblies 1810 may have the same lens attribute (e.g., view angle, focal length, auto-focusing, F-number (Fno), or optical zoom), or at least one lens assembly may have one or more lens attributes different from those of another lens assembly. The lens assembly 1810 may include, for example, a wide-angle lens or a telephoto lens.

The flash 1820 may emit light that is used to reinforce light reflected from an object. According to an embodiment, the flash 1820 may include one or more light emitting diodes (LEDs) (e.g., a red-green-blue (RGB) LED, a white LED, an infrared (IR) LED, or an ultraviolet (UV) LED) or a xenon lamp. The image sensor 1830 may obtain an image corresponding to an object by converting light emitted or reflected from the object and transmitted via the lens assembly 1810 into an electrical signal. According to an embodiment, the image sensor 1830 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1830 may be implemented using, for example, a charged coupled device (CCD) sensor or a complementary metal oxide semiconductor (CMOS) sensor.

The image stabilizer 1840 may move the image sensor 1830 or at least one lens included in the lens assembly 1810 in a particular direction, or control an operational attribute (e.g., adjust the read-out timing) of the image sensor 1830 in response to the movement of the camera module 1880 or the electronic device 1701 including the camera module 1880. This allows compensating for at least part of a negative effect (e.g., image blurring) by the movement on an image being captured. According to an embodiment, the image stabilizer 1840 may sense such a movement by the camera module 1880 or the electronic device 1701 using a gyro sensor (not shown) or an acceleration sensor (not shown) disposed inside or outside the camera module 1880. According to an embodiment, the image stabilizer 1840 may be implemented, for example, as an optical image stabilizer. The memory 1850 may store, at least temporarily, at least part of an image obtained via the image sensor 1830 for a subsequent image processing task. For example, if image capturing is delayed due to shutter lag or multiple images are quickly captured, a raw image obtained (e.g., a Bayer-patterned image, a high-resolution image) may be stored in the memory 1850, and its corresponding copy image (e.g., a low-resolution image) may be previewed via the display module 1760. Thereafter, if a specified condition is met (e.g., by a user's input or system command), at least part of the raw image stored in the memory 1850 may be obtained and processed, for example, by the image signal processor 1860. According to an embodiment, the memory 1850 may be configured as at least part of the memory 1730 or as a separate memory that is operated independently from the memory 1730.

The image signal processor 1860 may perform one or more image processing with respect to an image obtained via the image sensor 1830 or an image stored in the memory 1850. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1860 may perform control (e.g., exposure time control or read-out timing control) with respect to at least one (e.g., the image sensor 1830) of the components included in the camera module 1880. An image processed by the image signal processor 1860 may be stored back in the memory 1850 for further processing, or may be provided to an external component (e.g., the memory 1730, the display module 1760, the electronic device 1702, the electronic device 1704, or the server 1708) outside the camera module 1880. According to an embodiment, the image signal processor 1860 may be configured as at least part of the processor 1720, or as a separate processor that is operated independently from the processor 1720. If the image signal processor 1860 is configured as a separate processor from the processor 1720, at least one image processed by the image signal processor 1860 may be displayed, by the processor 1720, via the display module 1760 as it is or after being further processed.

According to an embodiment, the electronic device 1701 may include a plurality of camera modules 1880 having different attributes or functions. In such a case, at least one of the plurality of camera modules 1880 may form, for example, a wide-angle camera and at least another of the plurality of camera modules 1880 may form a telephoto camera. Similarly, at least one of the plurality of camera modules 1880 may form, for example, a front camera and at least another of the plurality of camera modules 1880 may form a rear camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, the camera module 100 may be provided. The camera module may include the lens assembly 200, at least one reflective and refractive member 300, 400, 500, 500', 600, 600', 700, 700', or 800 in which light is reflected and/or refracted at least twice, and the image sensor IS. The reflective and refractive member 300, 400, 500, 500', 600, 600', 700, 700', or 800 may be configured to totally reflect at least a portion of light incident on the reflective and refractive member by satisfying the following Formula 1, Formula 2, Formula 3, Formula 4, and Formula 5 regarding a refractive index for total reflection inside the reflective and refractive member 300, 400, 500, 500', 600, 600', 700, 700', or 800.${n}_{i} \geq \frac{C 1 + b}{2 a - C 2}$
(where nᵢ is a refractive index of the reflective and refractive member, a is an angle between the incident surface 301, 401, 501, 501', 601, 601', 701, 701', or 801 of the reflective and refractive member and the first reflective surface 302, 402, 502, 502', 602, 602', 702, 702', or 802 adjacent to the incident surface, b is an incident angle of light incident on the reflective and refractive member, and C1 and C2 are a coefficient of a linear equation and a constant, respectively, when an inverse sine function for a reciprocal of the refractive index of the reflective and refractive member is expressed as a linear equation for a reciprocal of the reflective and refractive member.)$10 < a < 50$$b < 45$$1.1 < C 1 < 1.4$$- 0.3 < C 2 < + 0.3$

According to an embodiment, the camera module may satisfy the following Formula 6.$25 < Vd _ 1 < 95$
(where Vd_1 is an Abbe number of the reflective and refractive member.)

According to an embodiment, the incident surface and the exit surface of the reflective and refractive member may be coated with a material that reduces reflectivity.

According to an embodiment, the incident surface and the exit surface of the reflective and refractive member may be coated with a material that blocks 80% or more of light having a wavelength of 700nm or more.

According to an embodiment, the camera module may satisfy the following Formula 7.$5 < FOV < 35$
(where FOV (field of view) is a field of view of the camera module.)

According to an embodiment, the lens or the image sensor may be configured to perform a focus adjustment function by moving along an optical axis O-I.

According to an embodiment, the lens or the image sensor may be configured to perform an anti-shake function by moving along a direction perpendicular to the optical axis O-I.

According to an embodiment, the camera module may be configured to perform an anti-shake function through a movement or rotational operation of the reflective and refractive member.

According to an embodiment, the reflective and refractive member may include a glass material.

According to an embodiment, the camera module may satisfy the following Formula 8.$p 1 \leq EIA \leq p 2$
(where EIA effective incident area is an effective incident area, p1 is a first end of a first area 8011 corresponding to the effective incident area, and p2 is a second end of the first area 8011 corresponding to the effective incident area.)

According to an embodiment, the camera module may be a folded-type camera module.

According to an embodiment, a mirror coating may be applied to the first reflective surface.

According to an embodiment, total reflection may occur on each of the first reflective surface and the incident surface.

According to an embodiment, the electronic device 1701 including the camera module according to the above-described embodiments may be provided.

According to an embodiment of the disclosure, the electronic device 1701 may be provided. The electronic device 1701 may include the reflective and refractive member 300, 400, 500, 500', 600, 600', 700, 700', or 800 configured to reflect and/or refract at least a portion of light, and the image sensor IS configured to detect at least a portion of light passing through the reflective and refractive member. The reflective and refractive member may include the first surface 301, 401, 501, 501', 601, 601', 701, 701', or 801 on which light is incident and the second surface 302, 402, 502, 502', 602, 602', 702, 702', or 802 inclined with respect to the first surface. Further, the reflective and refractive member 300, 400, 500, 500', 600, 600', 700, 700', or 800 may be configured to totally reflect at least a portion of light incident on the reflective and refractive member by satisfying the following Formula 9, Formula 10, Formula 11, Formula 12, and Formula 13 regarding a TRF inside the reflective and refractive member 300, 400, 500, 500', 600, 600', 700, 700', or 800.$TRF = \frac{C 1 + b}{2 a - C 2}$
(where a is an angle between the first surface and the second surface adjacent to the first surface, b is an incident angle of light incident on the reflective and refractive member, and C1 and C2 are a coefficient of a linear equation and a constant, respectively, when an inverse sine function for a reciprocal of a refractive index of the reflective and refractive member is expressed as a linear equation for a reciprocal of the reflective and refractive member.)$10 < a < 50$$b < 45$$1.1 < C 1 < 1.4$$- 0.3 < C 2 < + 0.3$

According to an embodiment, the electronic device may satisfy the following Formula 14.$25 < Vd_ 1 < 95$
(where Vd_1 is an Abbe number of the reflective and refractive member.)

According to an embodiment, the electronic device may satisfy the following Formula 15.$5 < FOV < 35$
(where FOV (field of view) is a field of view of the camera module.)

According to an embodiment, the reflective and refractive member may include a glass material.

According to an embodiment, the electronic device may satisfy the following Formula 16.$p 1 \leq EIA \leq p 2$
(where EIA (effective incident area) is an effective incident area, p1 is a first end of the first area 8011 corresponding to the effective incident area, and p2 is a second end of the first area 8011 corresponding to the effective incident area.)

The effects obtainable from the disclosure are not limited to the effects mentioned above, and other effects not mentioned will be clearly understood by those skilled in the art.

Although the disclosure has been illustrated and described with respect to an embodiment, it should be understood that the embodiment is intended to be illustrative and not to limit the disclosure. It will be apparent to those skilled in the art that various changes in form and detail may be made without departing from the overall scope of the disclosure, including the appended claims and their equivalents.

## Claims

1. A camera module (100) comprising:
a lens assembly (200);
at least one reflective and refractive member (300; 400; 500; 500'; 600; 600'; 700; 700'; 800) in which light is reflected and/or refracted at least twice; and
an image sensor (IS),
wherein the reflective and refractive member (300; 400; 500; 500'; 600; 600'; 700; 700'; 800) is configured to totally reflect at least a portion of light incident on the reflective and refractive member by satisfying the following Formula 1, Formula 2, Formula 3, Formula 4, and Formula 5 regarding a refractive index for total reflection inside the reflective and refractive member (300; 400; 500; 500'; 600; 600'; 700; 700'; 800), ${n}_{i} \geq \frac{C 1 + b}{2 a - C 2}$
(where nᵢ is a refractive index of the reflective and refractive member, a is an angle between an incident surface (301; 401; 501; 501'; 601; 601'; 701; 701'; 801) of the reflective and refractive member and a first reflective surface (302; 402; 502; 502'; 602; 602'; 702; 702'; 802) adjacent to the incident surface, b is an incident angle of light incident on the reflective and refractive member, and C1 and C2 are a coefficient of a linear equation and a constant, respectively, when an inverse sine function for a reciprocal of the refractive index of the reflective and refractive member is expressed as a linear equation for a reciprocal of the reflective and refractive member), $10 < a < 50$ $b < 45$ $1.1 < C 1 < 1.4$ $- 0.3 < C 2 < + 0.3$

2. The camera module of claim 1, wherein the camera module satisfies the following Formula 6, $25 < Vd_ 1 < 95$ (where Vd_1 is an Abbe number of the reflective and refractive member.)

3. The camera module of claim 1 or 2, wherein the incident surface and an exit surface of the reflective and refractive member are coated with a material that reduces reflectivity.

4. The camera module of any one of claims 1 to 3, wherein the incident surface and the exit surface of the reflective and refractive member are coated with a material that blocks 80% or more of light having a wavelength of 700nm or more.

5. The camera module of any one of claims 1 to 4, wherein the camera module satisfies the following Formula 7, $5 < FOV < 35$ (where FOV (field of view) is a field of view of the camera module.)

6. The camera module of any one of claims 1 to 5, wherein the lens or the image sensor is configured to perform a focus adjustment function by moving along an optical axis (O-I).

7. The camera module of any one of claims 1 to 6, wherein the lens or the image sensor is configured to perform an anti-shake function by moving along a direction perpendicular to an optical axis (O-I).

8. The camera module of any one of claims 1 to 7, wherein the camera module is configured to perform an anti-shake function through a movement or rotational operation of the reflective and refractive member.

9. The camera module of any one of claims 1 to 8, wherein the reflective and refractive member includes a glass material.

10. The camera module of any one of claims 1 to 9, wherein the camera module satisfies the following Formula 8, $p 1 \leq EIA \leq p 2$ (where EIA (effective incident area) is an effective incident area, p1 is a first end of a first area (8011) corresponding to the effective incident area, and p2 is a second end of the first area (8011) corresponding to the effective incident area.)

11. The camera module of any one of claims 1 to 10, wherein the camera module is a folded-type camera module.

12. The camera module of any one of claims 1 to 11, wherein a mirror coating is applied to the first reflective surface.

13. The camera module of any one of claims 1 to 12, wherein total reflection occurs on each of the first reflective surface and the incident surface.

14. The camera module of any one of claims 1 to 13, wherein a cut surface is formed at a vertex between the incident surface and the first reflective surface, and/or at a vertex between the reflective surface and a second reflective surface.

15. An electronic device (1701) comprising the camera module of any one of claims 1 to 14.
